# EUROPÄISCHE PATENTSCHRIFT

(11) **EP 2 693 218 B1**
(45) Veröffentlichungstag und Bekanntmachung des Hinweises auf die Patenterteilung: **31.08.2016**
(21) Anmeldenummer: 13176709.7
(22) Anmeldetag: 16.07.2013
(51) Int. Cl.: G01N 35/00, B01L 9/02, G01N 35/04

(54) **Verfahren und Vorrichtung zum Erfassen bzw. Überprüfen einer Anordnung von Laborartikeln auf einem Arbeitsfeld einer Labor-Arbeitsstation**
Process und Apparatus for determining and testing an arrangement of laboratory articles on a work bench of a laboratory work station
Procédé et dispositif pour déterminer un arrangement d'articles de laboratoire sur un établi d'un station de travail laboratoire

(30) Priorität: 31.07.2012 CH 12332012
(43) Veröffentlichungstag der Anmeldung: 05.02.2014
(73) Patentinhaber: Tecan Trading AG, 8708 Männedorf (CH)
(72) Erfinder: Eckard, Simon M., 8105 Regensdorf (CH); Ingenhoven, Nikolaus, 8713 Uerikon (CH)
(74) Vertreter: OK pat AG

(56) Entgegenhaltungen:
- WO-A1-2005/098455
- FR-A1- 2 950 995
- JP-A- 2007 303 885
- US-A1- 2006 088 928

## Beschreibung

Die Erfindung betrifft ein Verfahren und eine entsprechende Vorrichtung zum Erfassen bzw. Überprüfen einer Anordnung von Laborartikeln auf einem Arbeitsfeld einer Labor-Arbeitsstation.

Derartige Labor-Arbeitsstationen sind bekannt und umfassen beispielsweise eine Arbeitsfläche bzw. zumindest ein Arbeitsfeld zum Platzieren von Laborartikeln, wie z.B. von Behältern in der Form von Mikroplatten und Probenröhrchen, von Trägern oder sogenannten "Carriers" zum Aufnehmen derartiger Behälter oder beispielsweise auch von Pipettenspitzen oder Pipettenspitzenmagazinen. Vorzugsweise umfassen derartige Labor-Arbeitsstationen einen motorisierten Roboter oder Roboterarm, der mit Greifern zum Erfassen der Laborartikel und/oder mit Pipetten zum Aufnehmen und Abgeben von Flüssigkeitsproben ausgerüstet sein kann. Speziell bevorzugt sind derartige Labor-Arbeitsstationen, die zudem einen Rechner oder Computer zur Steuerung der Bewegungen des motorisierten Roboters oder Roboterarms und vorzugsweise auch anderer Parameter der Labor-Arbeitsstationen umfassen. Bevorzugt sind Labor-Arbeitsstationen, deren Arbeitsfläche bzw. Arbeitsfelder im Wesentlichen horizontal-angeordnet sind. Vorzugsweise umfasst ein als Pipettierroboter ausgebildeter Roboter oder Roboterarm zumindest eine Pipette zum Aufnehmen (Aspirieren) und Abgeben (Dispensieren) von Flüssigkeitsproben. Üblicherweise ist die Steuerung der Labor-Arbeitsstation derart mit dem Roboter oder Roboterarm verbunden und mit einer entsprechenden Software ausgestattet, dass der Rechner den Roboter oder Roboterarm veranlasst, ein Arbeitswerkzeug, wie eine Pipette oder einen Greifer an bestimmbaren Orten auf dem zumindest einen Arbeitsfeld zu positionieren und dort ausgewählte Arbeiten zu verrichten. Derartige Labor-Arbeitsstationen sind an sich bekannt und werden vom aktuellen Anmelder unter dem Handelsnamen Freedom EVO^{®} hergestellt und vertrieben.

Eine Gemeinsamkeit solcher Labor-Arbeitsstationen bzw. Systeme liegt darin, dass Proben oft in standardisierten Mikroplatten bearbeitet werden. Solche Mikroplatten wurden vom American National Standards Institute (ANSI) und von der Society for Biomolecular Sciences (SBS) beschrieben und standardisiert. Derartige Mikroplatten sind in allen möglichen Formaten erhältlich, umfassen aber typischerweise 96 Probengefässe oder "Wells", die in einem regelmässigen 8 x 12-Raster mit einem 9 mm Achsabstand angeordnet sind. Mikroplatten mit einem Vielfachen (z.B. 384 oder 1536) oder auch nur einem Teil (z.B. 48 oder 24) dieser Weil-Zahl oder Dichte werden ebenfalls verwendet.

Beispielsweise einer oder mehrere sich entsprechend einem kartesischen Koordinatensystem bzw. einem Polarkoordinatensystem bewegende Roboter können zum Arbeiten auf einem rechteckigen bzw. runden Arbeitsfeld einer Labor-Arbeitsstation verwendet werden. Diese Roboter können Platten oder andere Probenbehälter tragen und auch Flüssigkeiten transferieren. Ein zentrales Steuersystem bzw. ein Computer kontrolliert und steuert diese bekannten Labor-Systeme, deren hervorragender Vorteil in der kompletten Automatisierung der Arbeitsprozesse liegt. Folglich können solche Labor-Systeme über Stunden und Tage betrieben werden, ohne dass ein menschlicher Eingriff notwendig wäre.

Derartige automatisierte Labor-Systeme, die oft auch als "Robotic Sample Processor" (RSP) bezeichnet werden, begründen die Bewegungen ihres Roboters oder Roboterarms typischerweise auf der sogenannten Köppelnavigation. Gemäss diesem konventionellen Verfahren wird ein Abbild der realen Situation (Platzierung und Orientierung von Laborartikeln auf dem Arbeitsfeld) mit der System-Software generiert. Dabei werden die Bewegungen des Robotarms hin zu bestimmten Objekten oder Laborartikeln auf der Basis der im Software-Modell enthaltenen Distanzen berechnet. Probleme können sich dadurch ergeben, dass die errechnete Bewegungen vom Roboterarm ausgeführt werden, ohne dass ein Widerspruch mit der realen Situation, also z.B. eine Fehlplatzierung eines Laborartikels oder gar ein Liegenlassen eines Werkzeugs, in Betracht gezogen wird. Ganz offensichtlich können auch Fehlplatzierungen, z.B. das Positionieren einer Deepwell-Platte an der Stelle einer Standardmikroplatte, das falsche Ausrichten einer Mikroplatte oder gar das Fehlpositionieren eines Mikroplattenträgers oder Carriers, zu unausweichlichen Verfahrensfehlern und kostspieligen Zusammenstössen mit am Roboterarm befestigten Vorrichtungen (z.B. Pipetten) führen. Schlimmer noch, möglicherweise erzielte Diagnostik-Resultate in falsch orientierten Mikroplatten könnten zu Falschzuordnungen der entsprechenden Diagnosen führen.

Es besteht deshalb ein Bedarf in den unterschiedlichsten Zweigen der automatisierten Labortechnik, gleichgültig, ob diese die pharmazeutische Forschung, die klinische Diagnostik oder auch die Herstellung von solchen Produkten betreffen, nach einem Verfahren zum Erfassen der Anordnung von Objekten auf Laboreinrichtungen. Zudem betrifft dieser Bedarf ein Verfahren zum Überprüfen der Anordnung von Laborartikeln auf einem Arbeitsfeld einer Labor-Arbeitsstation.

Aus dem Patient EP 1 733 239 B1 sind ein Laborsystem-System und ein entsprechendes Verfahren zum Identifizieren und Orten von Laborartikeln auf der Oberfläche des Laborarbeitstischs bekannt, die auf der Verwendung von Radiofrequenzidentifikations-Etiketten, sogenannten RFID-Tags, beruhen. Dank der Unterteilung des Laborarbeitstischs mit einem virtuellen Gitter, in dessen Gitterschnittpunkten Sendeund Empfangs-Elemente zum Übertragen von Energie durch den Laborarbeitstisch hindurch angeordnet sind, können die mit RFID-Etiketten versehenen Laborartikel über eine identifizierbare Antenne angeregt und von einem an einen Zentralübermittler angeschlossenen Computer zuverlässig identifiziert und geortet werden.

Aus dem Dokument US 2006/0088928 A1 ist ein Anfärbeautomat für Gewebeproben bekannt, der ein Kontrollelement zum Steuern des Färbeprozesses, einen 2D-Sensor zum Erfassen von zweidimensionalen Bilddaten von wesentlichen Bestandteilen der Gewebeproben und zum Übergeben dieser Bilddaten an das Kontrollelement umfasst. Anhand aktueller Bilder von Teilen des Anfärbeautomats kann zudem dessen Zustand erfasst werden, indem der optische Sensor zum automatischen Identifizieren und Überprüfen der aktuellen Position der im Anfärbeautomat vorhandenen Gewebeproben, Gewebeprobenträger und Reagenzienbehälter verwendet wird. Somit kann der 2D-Sensor zur Selbstkalibrierung des Anfärbeautomats (z.B. nach dem Durchführen von Unterhalts- oder Instandstellungsarbeiten) verwendet werden, indem der Automat ein aktuelles Bild mit einem gespeicherten Bild vergleicht und dabei feststellt, ob alle kritischen Komponenten am richtigen Platz montiert oder auch nur geringfügig verschoben angeordnet sind.

Es ist die Aufgabe der vorliegenden Erfindung ein alternatives Verfahren und eine entsprechende Vorrichtung zum Erfassen bzw. Überprüfen der Anordnung von Laborartikeln auf einem Arbeitsfeld einer Labor-Arbeitsstation vorzuschlagen.

Diese Aufgabe wird gemäss einem ersten Aspekt mit einem Erfassungs-Verfahren gemäss Anspruch 1 und gemäss einem zweiten Aspekt mit einem ÜberprüfungsVerfahren gemäss Anspruch 11 gelöst. Diese Aufgabe wird gemäss einem dritten Aspekt mit einer Labor-Arbeitsstation zur Durchführung dieser Verfahren gemäss Anspruch 19 gelost. Weitere bevorzugte und erfindungsgemässe Merkmale ergeben sich aus den jeweils abhängigen Ansprüchen.

Vorteile der vorliegenden Erfindung gegenüber dem Stand der Technik:
- Bei einer bekannten automatischen Bewertung des gefundenen Zustandes vergleicht ein Rechner ein Ist-Bild mit einem Soll-Bild (vgl. US 2006/0088928 A1); dies erfordert eine ausgefeilte Software mit recht komplexen Algorithmen damit eine auch nur einigermassen zuverlässige Bewertung bewerkstelligt werden kann. Erfindungsgemäss wird dagegen der schwierigere Teil, nämlich die Erken-. nung und Auswahl von ganz bestimmten Orientierungsmerkmalen (also die Bildbewertung) durch den Benutzer vorgenommen. Der Rechner (der LaborArbeitsstation oder ein externer Computer) übernimmt dann die einfachere Arbeit des Vergleichens der erfindungsgemäss vom Benutzer bereits ausgewählten Bildinformationen, wodurch eine hochzuverlässige Bewertung garantiert wird.
- Bei der automatischen Zustandserfassung in US 20.06/0088928 A1 werden zur Selbstkalibrierung der Anlage kritische Stellen in einem Gerät bei der Inbetriebnahme einmalig identifiziert; allerdings werden keine Angaben über die Art des Identifizierens offenbart. Erfindungsgemäss werden dagegen das detaillierte Verwenden eines interaktiven Nutzer-Interface und dadurch ein dynamisches, in unterschiedlichsten Situationen eines Prozessablaufs und in beliebigen Umgebungen einsetzbares Verfahren vorgeschlagen. Bei diesem erfindungsgemässen Verfahren werden mindestens zwei neu definierte Bilder beliebiger, aber jedes Mal durch den Benutzer ausgewählter Bereiche des Soll- und Ist-Zustandes miteinander verglichen, sodass über eine Kalibrierung der Anlage hinaus auch während dem Betrieb der Labor-Arbeitsstation gewählte Aufstellungen von Laborartikeln kontrolliert und getroffene Entscheidungen überprüft werden können.

Das erfindungsgemässe Verfahren und die erfindungsgemässe Laborarbeitsstation zum Erfassen bzw. Überprüfen der Anordnung von Laborartikeln auf einem Arbeitsfeld einer Labor-Arbeitsstation werden nun anhand schematischer Zeichnungen näher erläutert, wobei beispielhafte Ausführungsformen des Erfassungs- bzw. Überprüfungs-Verfahrens sowie beispielhafte Ausführungen der Laborarbeitsstation und deren Verwendung illustriert sind ohne den Umfang der vorliegenden Erfindung einschränken zu wollen. Dabei zeigt:
- Fig. 1: eine zum Durchführen der erfindungsgemässen Verfahren verwendete Labor-Arbeitsstation mit zumindest einem Arbeitsfeld und einem als Trägervorrichtung verwendeten Roboterarm, an weichem eine oder zwei Digitalkameras befestigt sind;
- Fig. 2: einen ersten Lernschritt des erfindungsgemässen Erfassungs-verfahrens, bei dem eine Digitalkamera verwendet wird, um die vorschriftgemäss aufgebaute, ursprüngliche Anordnung von Laborartikeln auf dem Arbeitsfeld der Labor-Arbeitsstation zu erfassen;
- Fig. 3: einen zweiten Lernschritt des erfindungsgemässen Erfassungs-Verfahrens, bei dem die vier sich in der Eckposition befindenden Wegwerfpipettenspjtzen auf dem Bild von Fig. 2 mit einem Fadenkreuz markiert werden;
- Fig. 4: eine digitale Verarbeitung eines aus Fig. 2 ausgewählten Referenz-Bildausschnitts, wobei:
Fig. 4A den aus der Fig. 2 ausgewählten Referenz-Bildausschnitt,
Fig. 4B ein Graustufenbild des ausgewählten Referenz-Bildausschnitts nach einer ersten Ableitung nach x,
Fig. 4C ein Graustufenbild des ausgewählten Referenz-Bildausschnitts nach einer ersten Ableitung nach y, und
Fig. 4D ein skaliertes Referenz-Summenbild der beiden Bilder von Fig. 4B und 4C zeigt;
- Fig. 5: eine schematische Darstellung des Resultats des Erfassens einer ursprünglichen Anordnung von Laborartikeln auf einem Arbeitsfeld einer LaborArbeitsstation;
- Fig. 6: eine schematische Darstellung des Erstellens von aktuellen Bildausschnitten aus den aktuellen Digitalbildern, wobei diese aktuellen Bildausschnitte durch X/Y-Parameter der Referenz-Bildparameter-Dateien definiert werden;
- Fig. 7: eine schematische Darstellung eines alternativen Erstellens von aktuellen Bildausschnitten aus den aktuellen Digitalbildern, wobei diese aktuellen Bildausschnitte durch X/Y-Parameter der Referenz-Bildparameter-Dateien definiert werden, wobei zusätzlich zu den durch die X/Y-Parameter der Referenz-Bildparameter-Dateien definierten aktuellen Bildausschnitten aus den aktuellen Digitalbildern zusätzlich eine diese aktuellen Bildausschnitte umgebende Pufferzone addiert wird;
- Fig. 8: das Resultat einer Überprüfung der Anordnung von Laborartikeln auf einem Arbeitsfeld einer Labor-Arbeitsstation mit angezeigten Übereinstimmungen und Fehlern;
- Fig. 9: ein Flussdiagramm einer bevorzugten Ausführungsform des ErfassungsVerfahrens;
- Fig. 10: ein Flussdiagramm einer bevorzugten Ausführungsform des Überprüfungs-Verfahrens.

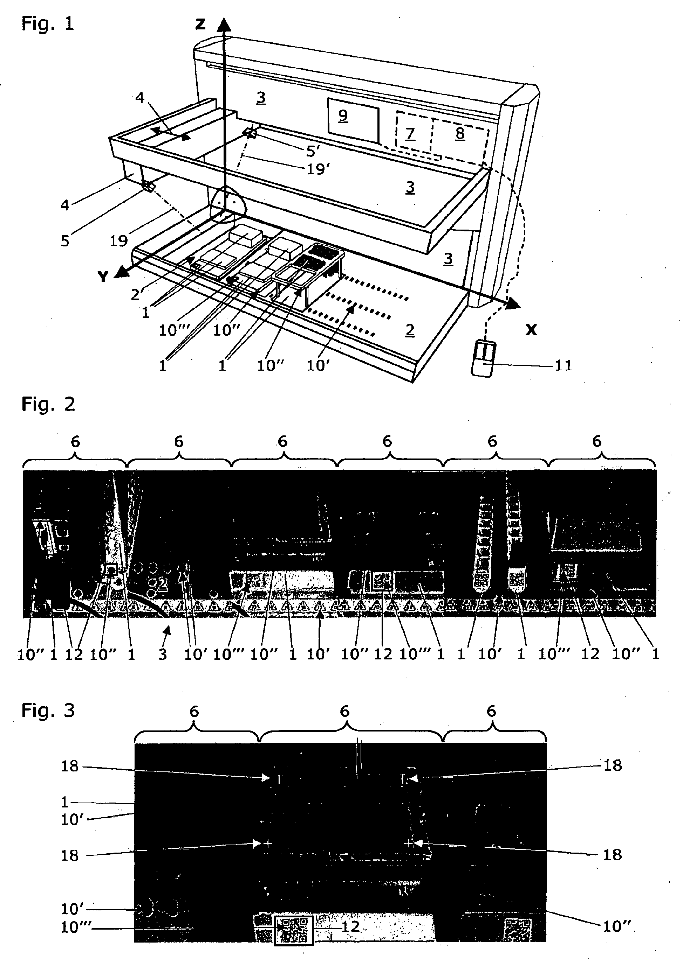

Zum Durchführen des erfindungsgemässen Verfahrens zum Erfassen der Anordnung von Laborartikeln 1 auf einem Arbeitsfeld 2 einer Labor-Arbeitsstation 3 ist vorgesehen, dass oberhalb des Arbeitsfelds 2 der Labor-Arbeitsstation 3 zumindest eine Trägervorrichtung 4 angeordnet ist. Die Figur 1 zeigt eine zum Durchführen des erfindungsgemässen Verfahrens verwendete Labor-Arbeitsstation 3 mit zumindest einem Arbeitsfeld 2 und mit einem als Trägervorrichtung 4 verwendeten Roboterarm (hier in X-Richtung verfahrbar, vgl. Doppelpfeil) an welchem eine oder zwei Digitalkameras 5,5' befestigt sind. Tatsächlich sind hier zwei Arbeitsfelder 2,2' dargestellt, wobei das erste Arbeitsfeld 2 als Arbeitstisch oder Teilbereich eines Arbeitstisches betrachtet werden kann. Das zweite Arbeitsfeld 2' ist hier gegenüber dem ersten Arbeitsfeld 2 abgesenkt und erstreckt sich vorzugsweise im Wesentlichen parallel zum ersten Arbeitsfeld 2 und horizontal. Abweichend von der Darstellung in Fig. 1 kann sich das zweite Arbeitsfeld 2' auch über dem ersten Arbeitsfeld 2 befinden (nicht gezeigt).

Wie gezeigt können auf dem zweiten Arbeitsfeld ebenfalls Laborartikel 1 oder beispielsweise auch Geräte zum Bearbeiten oder Analysieren der Proben in Mikroplatten (wie z.B. Zentrifugen, Inkubatoren, Wasser, Reader etc.) platziert werden. In einer einfacheren Ausführungsform können nur eine oder zwei Digitalkameras 5,5' in einer fixen Position, unverfahrbar montiert sein (nicht gezeigt). Als weitere Alternative kann vorgesehen sein, dass die ursprüngliche Anordnung von Laborartikeln 1 auf dem Arbeitsfeld 2 der Labor-Arbeitsstation 3 mittels zweier Digitalkameras 5,5' erfasst wird, wobei diese Digitalkameras 5 an zwei unterschiedlichen, in einem Abstand zueinander angeordneten Trägervorrichtungen 4,4' befestigt sind (nicht gezeigt). Zum Umfang der vorliegenden Erfindung gehören die unterschiedlichsten Trägervorrichtungen 4,4', die beweglich oder verfahrbar, z.B. als Robotarme, Wagen oder Schlitten, die aber auch stationär, z.B. als Befestigungswinkel, Schrauben und dergleichen ausgebildet sein können.

Nachdem eine Labor-Arbeitsstation 3 und ihr zumindest ein Arbeitsfeld 2 in gewünschter Weise mit Laborartikeln 1 bestückt und aufgebaut (sowie allenfalls verwendet oder getestet) wurde, kann das erfindungsgemässe Erfassungsverfahren angewendet werden.

Das erfindungsgemässe Erfassungs-Verfahren umfasst das Erfassen, einer ursprünglichen Anordnung von Laborartikeln 1 auf dem Arbeitsfeld 2 der Labor-Arbeitsstation 3 mittels mindestens eines Referenz-Digitalbilds 6, wobei die Referenz-Digitalbilder 6 mit mindestens einer, an der Trägervorrichtung 4 in einer definierten Position und Ausrichtung befestigten, Digitalkamera 5 aufgenommenen werden.

Vorzugsweise wird zum Erfassen der ursprünglichen Anordnung von Laborartikeln 1 auf dem Arbeitsfeld 2 der Labor-Arbeitsstation 3 die zumindest eine Trägervorrichtung 4 mit daran befestigten ein öder zwei Digitalkameras 5,5' an zumindest zwei Aufnahmeorte bewegt, wobei an jedem dieser Aufnahmeorte mit jeder dieser Digitalkameras 5,5' ein Referenz-Digitalbild 6 aufgenommen wird.

Das Bewegen der Digitalkameras 5,5' zu den Aufnahmeorten und die Aufnahme der Referenz-Digitalbilder 6 an den Aufnahmeorten wird gemäss einer bevorzugten Ausführungsform von einer Software der Labor-Arbeitsstation 3 gesteuert. Gemäss einer bevorzugten, ersten alternativen Ausführungsform wird das Erfassungs-Verfahren durch ein in einem separaten Rechner 8' aktivierbares Computerprogramm zur Durchführung des Verfahrens zum Erfassen der Anordnung von Laborartikeln 1 auf dem Arbeitsfeld 2 der Labor-Arbeitsstation 3 gesteuert. Gemäss einer bevorzugten, zweiten alternativen Ausführungsform wird das Erfassungs-Verfahren von einer Software der Labor-Arbeitsstation 3 gesteuert, wobei die Labor-Arbeitsstation 3 vorzugsweise auch den ersten und zweiten Speicher 7,7', den Rechner 8, den Bildschirm 9 und die Eingabegeräte 11 umfasst. Anstelle eines Bildschirms 9 kann jedes andere zur Anzeige von Bildern geeignete Gerät d.h. Bildanzeigegerät 9, wie z.B. ein Beamer, eingesetzt werden, das mit dem Rechner 8 wirkverbunden ist.

Allgemein wird ein Gerät als mit einem anderen Gerät "wirkverbunden" bezeichnet, wenn zwischen diesen beiden Geräten entsprechend derer Bestimmung elektrische Impulse, Energie, elektromagnetische Wellen, Informationen oder Daten über eine Kabelverbindung oder über eine kabellose Verbindung (wie z.B. mittels WiFi oder Bluetooth) ausgetauscht werden können.

Die Bildaufnahme erfolgt gemäss dem gewählten Testaufbau mittels einer zur verwendeten Labor-Arbeitsstation 3 spezifischen Software, welche dazu ausgelegt ist, ein aktiviertes Kamerakontrollprogramm zu starten. Schrittweise werden dabei nach jeder Positionsänderung die Digitalkameras 5,5' ausgelöst.

Als Digitalkameras zur Verwendung in diesem Verfahren sind praktisch alle Kameras 5,5' geeignet, die einen bildgebenden Sensor mit einer Auflösung von mindestens 320 x 240 Pixel, bevorzugt mindestens 640 x 480 Pixel, umfassen. Bevorzugt sind Digitalkameras, die zum automatischen Regeln von Fokus, Weissabgleich, Belichtung und Kontrast ausgebildet sind. In einem Versuchsaufbau wurden eine oder zwei C310-USB-Webcams der Firma Logitech (Logitech Schweiz AG, CH-8048 Zürich) mit folgender Abmessung: Länge = 80 mm, Breite = 20 mm, Höhe = 12 mm verwendet. Der bildgebende Sensor dieser Kameras weist eine Auflösung von 640 x 480 Pixel auf und nimmt Farbbilder auf; der Weissabgleich, die Belichtung und der Kontrast werden bei diesen Kameras automatisch geregelt. Abweichend von den hier vorgestellten Ausführungsformen können anstelle von einer oder zwei Digitalkameras oder Webcams auch eine oder zwei Analogkameras oder Videokameras eingesetzt werden. In diesen weniger bevorzugten Ausführungsformen müssen zum Erzielen entsprechender Ergebnisse zuerst allenfalls anfallende, analoge Referenzbilder zusätzlich digitalisiert werden.

Die vorne montierte Kamera 5 (bzw. deren optische Achse 19) ist hier in einem Winkel von 45° zur Senkrechten (Z-Richtung) geneigt und überblickt den vorderen Bereich des Arbeitsfelds 2 bis zur zweiten Mikroplatten-Position des für die Aufnahme von drei Mikroplatten konzipierten Mikroplatten-Carriers 1. Die erste Position des abgebildeten Mikroplatten-Carriers (in der Position mit niedrigerem X-Wert) ist mit einer Mikroplatte mit sehr niedriger Bauhöhe und die dritte Position ist mit einer Mikroplatte mit hoher Bauhöhe besetzt; die zweite Position des Mikroplatten-Carriers ist hier nicht besetzt. Die zweite Position des abgebildeten Pipettenspitzen-Racks (in der Position mit höherem X-Wert) ist mit Wegwerfpipetten mit einem kleinen Volumen und die dritte Position ist mit Wegwerfpipetten mit einem grossen Volumen bestückt; die erste Position des Pipettenspitzen-Racks ist hier nicht besetzt.

Die hintere Kamera 5' (bzw. deren optische Achse 19') ist gegenüber der Senkrechtren um 60° geneigt und überblickt den hinteren Teil des Arbeitsfelds 2 ebenfalls bis zur zweiten Mikroplatten-Position des Mikroplatten-Carriers 1. Die hintere Kamera 5' ist gegenüber der vorderen Kamera 5 in positiver X-Richtung um etwa 2.5 cm versetzt. Beide Digitalkameras 5,5' nehmen Bilder im Hochformat auf, dabei verläuft die Bild-Längsseite parallel zur Y-Richtung des kartesischen Koordinatensystems der Labor-Arbeitsstation 3. Die Bildübertragung zu einem Rechner 8,8' erfolgt über zwei handelsübliche USB-Kabel (in Fig. 1 der Übersichtlichkeit halber nicht gezeigt). Die Stromaufnahme der beiden Webcams 5,5' ist so gering, dass sie zeitgleich im Video-Modus an demselben passiven USB-Hub betrieben werden können.

Das erfindungsgemässe Erfassungs-Verfahren umfasst im Weiteren das Abspeichern dieses mindestens einen Referenz-Digitalbilds 6 in einem ersten Speicher 7 eines mit der Digitalkamera 5 wirkverbunldenen Rechners 8,8' und das Anzeigen dieses mindestens einen Referenz-Digitalbilds 6 auf einem mit dem Rechner 8,8' wirkverbundenen Bildschirm bzw. ein Bildanzeigegerät 9. Als erster Speicher 7 wird bevorzugt ein Arbeitsspeicher (Random Access Memory = RAM) eines Rechners 8,8' verwendet. Alternativ dazu könnte das Abspeichern dieses mindestens einen Referenz-Digitalbilds 6 auch anderswo, z.B. auf einer internen oder externen Festplatte (Hard Disc Drive = HDD) erfolgen. Als Rechner kann der Zentralcomputer 8 einer Labor-Arbeitsstation (RSP) oder auch ein separater Rechner 8' verwendet werden.

Das erfindungsgemässe Erfassungs-Verfahren umfasst im Weiteren das Markieren und Erzeugen von Referenz-Bildausschnitten 12 mit charakteristischen auf dem mindestens einen Referenz-Digitalbild 6 sichtbaren Merkmalen 10, die ausgewählt sind aus einer Gruppe, die aus Merkmalen des Arbeitsfelds 10', aus Merkmalen der Laborartikel 10" und aus zusätzlichen Markierungen 10"' besteht. Zu diesem Zweck wird das mindestens eine Referenz-Digitalbild 6 (vorzugsweise aber mehrere Referenz-Digitalbilder 6, die zu mindestens einem Streifenbild zusammengesetzt wurden) dem Benutzer auf dem Bildschirm bzw. Bildanzeigegerät 9 präsentiert, vorzugsweise mit der Aufforderung, relativ kleine, markante und für den Ablauf der geplanten Versuche wichtige Stellen als Referenz-Bildausschnitte 12 zu markieren.

Der Benutzer wählt nun Bereiche auf dem Arbeitsfeld 2 der Labor-Arbeitsstation 3 mit charakteristischen auf dem mindestens einen Referenz-Digitalbild 6 sichtbaren Merkmalen 10 aus. Diese Merkmale 10 sind ausgewählt aus einer Gruppe, die aus Merkmalen des Arbeitsfelds 10', aus Merkmalen der Laborartikel 10" und aus zusätzlich angebrachten Markierungen 10'" besteht. Das Auswählen geschieht optisch am Bildschirm bzw. mithilfe des Bildanzeigegeräts 9. Zum Markieren dieser Referenz-Bildausschnitte 12 wird mindestens ein mit dem Rechner 8,8' wirkverbundenes Eingabegerät 11 verwendet. Merkmale des Arbeitsfelds sind typischerweise Orte mit hohem Kontrast, wie z.B. Ebenen begrenzende Kanten, Löcher in Ebenen, aufstehende Grate, Schraubenköpfe, Beschriftungen und dergleichen. Merkmale der Laborartikel 10" sind typischerweise Ebenen begrenzende Kanten, Vertiefungen oder Erhebungen in Ebenen, aufstehende Grate, Beschriftungen und dergleichen. Zusätzlich angebrachte Markierungen 10"' sind typischerweise Linien, Flächen, Punkte, Logos, Beschriftungen und dergleichen, die z.B. auf selbstklebenden Etiketten aufgedruckt sind. Als Eingabegeräte 11 werden alle Computer-Peripheriegeräte, wie Tastaturen, Mäuse, Touchscreens, grafische Anwenderadapter (Graphic User Interface GUI), Smartphones, und dergleichen bezeichnet, die zum Eingeben von Informationen in einen Computer ausgebildet sind oder zu diesem Zweck verwendet werden können. Dabei können diese Eingabegeräte 11 wie gezeigt mittels eines Kabels oder auch kabellos (z.B. mittels Bluetooth- oder WiFi-Verbindüng; nicht gezeigt) mit dem Rechner 8,8' verbunden werden.

Gemäss einem in der Praxis getesteten, beispielhaften Erfassungsverfahren zieht der Benutzer mit einer Computer-Maus 11 vorzugsweise in ihrer Grösse angepasste und auf dem Bildschirm angezeigte Rechtecke um diese Merkmale 10',10",10"' und er bestätigt die Auswahl mit einem linken Mausklick oder mit dem Drücken der Entertaste einer Computer-Tastatur. Das Computerprogramm zur Durchführung des Erfassungs-Verfahrens gibt dem Benutzer über einen Farbwechsel der Rechtecke (vgl. Fig. 2) eine bestätigende Rückmeldung für die vollzogene Markierung. Hat der Benutzer alle gewünschten Merkmale 10',10",10"' markiert, so verlässt er den momentan aktiven Erfassungsdialog mit einem rechten Mausklick oder mit dem Drücken der ESC-Taste der Computer-Tastatur. Es kann vorgesehen werden, das Löschen von falsch gesetzten Bereichen im erfindungsgemässen Computerprogramm zu implementieren.

Die Figur 2 zeigt einen ersten Lernschritt des erfindungsgemässen Erfassungs-Verfahrens, bei dem die vordere Digitalkamera 5 verwendet wurde, um die vorschriftgemäss aufgebaute, ursprüngliche Anordnung von Laborartikeln 1 auf dem Arbeitsfeld 3 der Labor-Arbeitsstation 3 zu erfassen. Gezeigt ist ein Streifenbild, das aus sechs Referenz-Digitalbildern 6 zusammengesetzt worden ist.

Um sicher zu stellen, dass der Robotarm 4 der Labor-Arbeitsstation 3 korrekt initialisiert wurde, kann vorgesehen werden, dass als erster markierter Bereich bzw. Referenz-Bildausschnitt 12 ein statisches, unveränderbares Element des Arbeitsfelds 2 markiert werden muss, wie z.B. eine Ecke einer fix montierten Waschstation (vgl. Merkmal 10" im ersten Referenz-Digitalbild 6, ganz links in Fig. 2), einen bestimmten Grid-Index (vgl. Merkmal 10' im dritten Referenz-Digitalbild 6, etwa in der Mitte von Fig. 2), oder einen der schwarzen Noppen, die einen Einschub-Slot auf dem Arbeitsfeld 2 definieren (vgl. Merkmal 10' im zweiten Referenz-Digitalbild 6 von Fig. 2). Diese Initialisierung ermöglicht das Erkennen eines allfälligen Versatzes zwischen dem Robotarm 4 und dem Arbeitsfeld 2.

Vorzugsweise werden die markierten, zusätzlichen Merkmale 10"' am Arbeitsfeld 2 der Labor-Arbeitsstation 3 oder an den Laborartikeln 1 mittels eines Verfahrens angeordnet, das ausgewählt ist aus einer Gruppe, die das Aufdrucken, Anspritzen, Umspritzen, Aufkleben, Anschweissen und Anlöten umfasst, wobei diese zusätzlichen Merkmale 10'" z.B. als Firmen-Logo, 1D-Barcode, 2D-Barcode, 3D-Barcode, QR-Code, grafisches Element oder Markierung ausgebildet sind.

Die Figur 3 zeigt einen zweiten Lernschritt des erfindungsgemässen Erfassungs-Verfahrens, bei dem die vier sich in der Eckposition befindenden Wegwerfpipettenspitzen auf dem Bild von Fig. 2 mit einem Fadenkreuz 18 markiert werden. Auf diesem Referenz-Digitalbild 6 sind alle 96 Pipettenspitzen anwesend.

Optional können in einem anschliessenden Schritt je nach Bedarf komplexere Markierungen vorgenommen, bzw. höhere Funktionen des Computerprogramms zur Durchführung des Erfassungs-Verfahrens abgerufen werden. Als Beispiel wurde das Erkennen von fehlenden Wegwerfpipettenspitzen implementiert (vgl. Fig. 3). Zu diesem Zweck wurde ein Rack mit Wegwerfpipettenspitzen an den vier Ecken so markiert, dass die vier exponiertesten von 96 Wegwerfpipettenspitzen mit einem Fadenkreuz 18 versehen wurden. Die Markierung erfolgte in diesem Fall mit einfachen Mausklicks. Mit dem Drücken der ESC-Taste der Computer-Tastatur wurde dieser komplexere Dialog wieder verlassen.

Das erfindungsgemässe Erfassungs-Verfahren umfasst im Weiteren das Erzeugen von zumindest einer Referenz-Bildparameter-Datei 13 für die vorher erzeugten Referenz-Bildausschnitte 12. Eine solche Referenz-Bildparameter-Datei 13 umfasst vorzugsweise eine Ereignisnummer, X-Koordinaten (Breite) und Y-Koordinaten (Höhe) der Referenz-Bildausschnitte 12 (in Pixeln) oder mit anderen Worten die X/Y-Parameter der entsprechenden Referenz-Bildausschnitte 12. Alternativ umfasst eine solche Referenz-Bildparameter-Datei 13 vorzugsweise zusätzlich zu der Ereignisnummer den Winkel und die Distanz zum Zentrum der Referenz-Bildausschnitte 12 (in Pixeln) oder mit anderen Worten die Polarkoordinaten der entsprechenden Referenz-Bildausschnitte 12.

Das erfindungsgemässe Erfassungs-Verfahren umfasst im Weiteren das Abspeichern der zuvor erzeugten Referenz-Bildausschnitte 12 und der zuvor erzeugten Referenz-Bildparameter-Datei(en) 13 in einem zweiten Speicher 7'. Vorzugsweise werden in den Fällen, in denen mehrere Referenz-Digitalbilder 6 zum Erfassen einer aktuellen Anordnung von Laborartikeln 1 auf dem Arbeitsfeld 2 einer Labor-Arbeitsstation 3 benötigt werden, die Referenz-Digitalbilder 6 zu einem Referenz-Gesamtbild 15 zusammengesetzt. Folgerichtig werden dann das zuvor erzeugte Referenz-Gesamtbild 15 und die zuvor erzeugten Referenz-Bildparameter-Datei(en) 13 in einem zweiten Speicher 7' abgespeichert. Eine weniger bevorzugte Alternative umfasst das Abspeichern des zuvor erzeugten Referenz-Gesamtbilds 15 und der zuvor erzeugten Referenz-Bildparameter-Datei(en) 13 im Arbeitsspeicher (RAM), der damit alternativ als erster und zweiter Speicher 7,7' bezeichnet werden kann.

Vorzugsweise und optional wird die Belichtung der aufgenommenen Referenz-Digitalbilder 6 oder des Referenz-Gesamtbilds 15 automatisch überprüft. Bei allfälliger Über- oder Unterbelichtung (deren jeweiliger Schwellenwert vorzugsweise vorbestimmt wird) der Referenz-Digitalbilder 6 oder des Referenz-Gesamtbilds 15 wird bevorzugt einer der folgenden alternativen Schritte ausgeführt:
- der Benutzer wird aufgefordert, oder
- es erfolgt eine Anweisung an eine Steuerung, oder
- es erfolgt automatisch ein Befehl an eine Steuerung,
die ursprüngliche Anordnung von Laborartikeln 1 auf dem Arbeitsfeld 2der Labor-Arbeitsstation 3 erneut zu erfassen. Dabei wird bevorzugt, dass der Benutzer im ersten Fall den entsprechenden Befehl an die Steuerung geben kann, im zweiten Fall die Anweisung bestätigen kann, und im dritten Fall über den bereits ausgeführten Vorgang informiert wird.

Als zweiter Speicher 7' wird bevorzugt ein Arbeitsspeicher auf einer internen oder externen Festplatte (Hard Disc Drive = HDD) eines Rechners 8,8' verwendet. Alternativ dazu könnte das Abspeichern dieser zuvor erzeugten Referenz-Bildausschnitte 12 und Referenz-Bildparameter-Datei(en) 13 auch anderswo, z.B. in einem Arbeitsspeicher (Random Access Memory = RAM) erfolgen. Als Rechner kann der Zentralcomputer 8 einer Labor-Arbeitsstation (RSP) oder auch ein separater Rechner 8' verwendet werden. In jedem Fall wird als separater Rechner 8' z.B. ein mehr oder weniger mobiler Rechner, wie ein PC, Laptop, Netbook und dergleichen, aber auch ein fix stationierter Grosscomputer, wie z.B. ein Zentralcomputer in einem Rechenzentrum bezeichnet. Die Datenübertragung zwischen dem separaten Rechner 8' und der Labor-Arbeitsstation 3 kann kabelbasiert oder kabellos erfolgen.

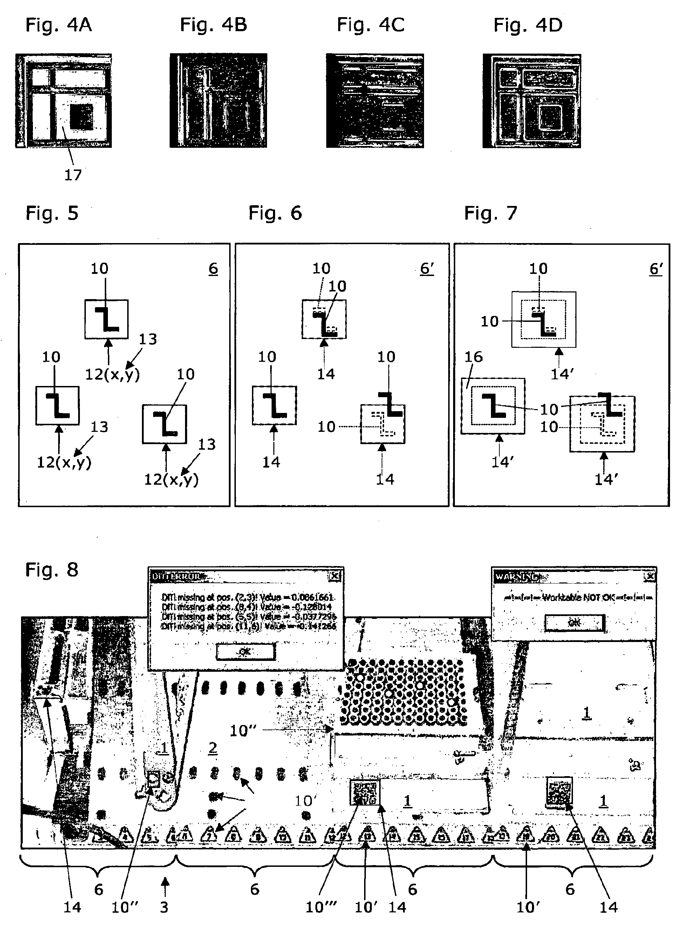

Die Figur 4 zeigt eine digitale Verarbeitung eines aus Fig. 2 ausgewählten Referenz-Bildausschnitts 12 , wobei die Fig. 4A den aus der Fig. 2 ausgewählten Referenz-Bildausschnitt 12 als Graustufenbild 17 zeigt. Ein solches Graustufenbild wird zumindest einer Ableitungsoperation in x- oder y-Richtung, unterworfen (Sobel-Operator) und die entstandenen Graustufenbilder addiert, um die nach Intensität gewichtete Kanteninformation zu erhalten, die deutlich beteuchtungsunabhängiger ist als die eigentliche Farbinformation der ursprünglichen Referenz-Bildausschnitte 12 (vgl. Fig. 2).

Die Fig. 4B zeigt ein Graustufenbild des ausgewählten Referenz-Bildausschnitts 12 nach einer ersten Ableitung nach x, deshalb weisen im Wesentlichen senkrecht verlaufende Kanten einen weissen "Schatten" auf. Die Fig. 4C zeigt ein Graustufenbild des ausgewählten Referenz-Bildausschnitts 12 nach einer ersten Ableitung nach y, deshalb weisen im Wesentlichen waagrecht verlaufende Kanten einen weissen "Schatten" auf. Die Fig. 4D zeigt ein skaliertes Referenz-Summenbild der beiden Bilder von Fig. 4B und 4C.

Bevorzugt werden die erzeugten Referenz-Bildausschnitte 12 oder das erzeugte Referenz-Gesamtbild 15 unverarbeitet oder verarbeitet zusammen mit den jeweils entsprechenden Referenz-Bildparameter-Dateien 13 im zweiten Speicher 7' abgelegt, wobei die optionale Bildverarbeitung das Extrahieren von Ortsinformationen mit hohem Kontrast umfasst. Bildverarbeitung kann nicht nur an Graustufenbildern, sondern auch an den Bildern des roten, grünen oder blauen Kanals eines Farbbilds ausgeführt werden. Zudem können Ableitungen der einzelnen Bilder nicht nur in x- oder y-Richtung, sondern auch in Richtungen ausgeführt werden, die in einem bestimmten Winkel von der x- oder y-Richtung abweichen.

Die Figur 5 zeigt eine beispielhafte, schematische Darstellung des Resultats des Erfassens einer ursprünglichen Anordnung von Laborartikeln 1 auf einem Arbeitsfeld 2 einer Labor-Arbeitsstation 3. Als Beispiel für ein charakteristisches Merkmal 10 wurde hier eine Z-förmige Figur bzw. Struktur gewählt. Auf diesem einzigen Referenz-Digitalbild 6 sind drei Referenz-Bildausschnitte 12 markiert und die jeweils entsprechende Referenz-Bildparameter-Datei 13 mit dem Ausdruck (x,y) symbolisiert.

Die vorliegende Erfindung umfasst auch ein Verfahren zum Überprüfen der Anordnung von Laborartikeln 1 auf einem Arbeitsfeld 2 einer Labor-Arbeitsstation 3, wobei eine aktuelle Anordnung von Laborartikeln 1 mit einer zuvor erfassten, ursprüngliche Anordnung von Laborartikeln 1 auf dem Arbeitsfeld 2 dieser Labor-Arbeitsstation 3 verglichen wird. Dieses Überprüfungs-Verfahren ist dadurch gekennzeichnet, dass es das Erzeugen von unverarbeiteten Referenz-Bildausschnitten 12 oder verarbeiteten Referenz-Bildausschnitten 12' oder das Erzeugen eines unverarbeiteten Referenz-Gesamtbilds 15 oder eines verarbeiteten Referenz-Gesamtbilds 15' und jeweils entsprechenden Referenz-Bildparameter-Dateien 13 für die ursprüngliche Anordnung von Laborartikeln 1 auf dem Arbeitsfeld 2 dieser Labor-Arbeitsstation 3 umfasst.

Vorzugsweise umfasst das Überprüfungs-Verfahren das Erfassen einer aktuellen Anordnung von Laborartikeln 1 auf dem Arbeitsfeld 2 der Labor-Arbeitsstation 3 mittels mindestens eines aktuellen Digitalbilds 6', wobei die aktuellen Digitalbilder 6' mit der mindestens einen, an der Trägervorrichtung 4 in einer definierten Position und Ausrichtung befestigten, Digitalkamera 5,5' aufgenommenen werden. Analog zum Erfassungs-Verfahren wird das Arbeitsfeld 2 der Labor-Arbeitsstation 3 wieder in gleichen Abständen abfotografiert und das mindestens eine aktuelle Digitalbild 6' wird im ersten Speicher 7 (z.B. im RAM) des mit der mindestens einen Digitalkamera 5,5' wirkverbundenen Rechners 8,8' abgespeichert.

Das Überprüfungs-Verfahren umfasst zudem das Laden der verarbeiteten Referenz-Bildausschnitte 12' oder des verarbeiteten Referenz-Gesamtbilds 15' sowie das Laden der entsprechenden Referenz-Bildparameter-Dateien 13 vom zweiten Speicher 7' (z.B. aus dem HDD) in den ersten Speicher 7 des Rechners 8,8' sowie das Erstellen von aktuellen Bildausschnitten 14 aus den aktuellen Digitalbildern 6', wobei diese aktuellen Bildausschnitte 14 durch X/Y-Parameter bzw. durch Polarkoordinaten der Referenz-Bildparameter-Dateien 13 definiert werden.

Das Überprüfungs-Verfahren umfasst zudem das Verarbeiten der aktuellen Bildausschnitte 14 entsprechende den verarbeiteten Referenz-Bildausschnitten 12'. Dabei kann die Bildverarbeitung wiederum nicht nur an Graustufenbildern, sondern auch an den Bildern des roten, grünen oder blauen Kanals eines Farbbilds ausgeführt werden. Zudem können Ableitungen der einzelnen Bilder nicht nur in x- oder y-Richtung, sondern auch in Richtungen ausgeführt werden, die in einem bestimmten Winkel von der x- oder y-Richtung abweichen. Die verarbeiteten aktuellen Bildausschnitte 14' werden anschliessend im ersten Speicher 7 (z.B. im RAM) des Rechners 8,8' abgespeichert.

Vorzugsweise und optional wird die Belichtung der aufgenommenen aktuellen Digitalbilder 6' automatisch überprüft. Bei allfälliger Über- oder Unterbelichtung (deren jeweiliger Schwellenwert vorzugsweise vorbestimmt wird) der aktuellen Digitalbilder 6' wird bevorzugt einer der folgenden alternativen Schritte ausgeführt:
- der Benutzer wird aufgefordert, oder
- es erfolgt eine Anweisung an eine Steuerung, oder
- es erfolgt automatisch ein Befehl an eine Steuerung,
die aktuelle Anordnung von Laborartikeln 1 auf dem Arbeitsfeld 2 der Labor-Arbeitsstation 3 erneut zu erfassen. Dabei wird bevorzugt, dass der Benutzer im ersten Fall den entsprechenden Befehl an die Steuerung geben kann, im zweiten Fall die Anweisung bestätigen kann, und im dritten Fall über den bereits ausgeführten Vorgang informiert wird.

Die Figur 6 zeigt eine schematische Darstellung des Erstellens von aktuellen Bildausschnitten 14 aus den aktuellen Digitalbildern 6', wobei diese aktuellen Bildausschnitte 14 durch die zuvor abgespeicherten X/Y-Parameter der Referenz-BildparameterDateien 13 definiert werden. Die zuvor beispielhaft gewählten charakteristischen Merkmale 10 (vgl. Fig. 5) mit der Z-förmigen Figur bzw. Struktur sind hier gestrichelt wiedergegeben:
- Der aktuelle Bildausschnitt 14 erfasst das ganze Merkmal 10 unten links in einer Position, die mit der ursprünglichen Position dieses Merkmals 10 perfekt übereinstimmt. Diese Labware 1 weist das richtige Merkmal 10 auf und wird als richtig erkannt, zudem befindet es sich am richtigen Ort.
- Der aktuelle Bildausschnitt 14 erfasst das ganze Merkmal 10 in der Mitte oben in einer Position, die mit der ursprünglichen Position dieses Merkmals 10 nicht ganz übereinstimmt. Diese Labware 1 weist das richtige Merkmal 10 auf und wird als richtig erkannt, jedoch befindet es sich nicht ganz am richtigen Ort, ein Versatz in der Y-Richtung wird angezeigt, ein entsprechender Alarm wird ausgelöst.
- Der aktuelle Bildausschnitt 14 erfasst nicht das ganze Merkmal 10 unten rechts in einer Position, die mit der ursprünglichen Position dieses Merkmals 10 nicht übereinstimmt. Diese Labware 1 wird nicht erkannt, weil sie nicht das richtige Merkmal 10 aufweist, ein entsprechender Alarm wird ausgelöst.

Die Figur 7 zeigt eine schematische Darstellung eines alternativen Erstellens von aktuellen Bildausschnitten 14' aus den aktuellen Digitalbildern 6', wobei diese aktuellen Bildausschnitte 14' durch X/Y-Parameter der Referenz-Bildparameter-Dateien definiert werden, und wobei zusätzlich zu den durch die X/Y-Parameter der Referenz-Bildparameter-Dateien 13 definierten aktuellen Bildausschnitten 14 aus den aktuellen Digitalbildern 6' zusätzlich eine diese aktuellen Bildausschnitte 14 (vgl. Fig. 6) umgebende Pufferzone 16 addiert wird. Vorzugsweise wird beim Erstellen der durch die X/Y-Parameter der Referenz-Bildparameter-Dateien 13 definierten aktuellen Bildausschnitte 14 aus den aufgenommenen aktuellen Digitalbildern 6' zusätzlich eine diese aktuellen Bildausschnitte 14 umgebende Pufferzone 16 mit einer konstanten Breite von beispielsweise 10 Pixeln addiert. An den Bildrändern kann diese Breite der Pufferzone 16 angepasst (verbreitert oder geschmälert) werden.

Das Überprüfungs-Verfahren umfasst vorzugsweise, dass die im Schritt j) (vgl. Anspruch 16) verarbeiteten aktuellen Bildausschnitte 14' mit oder ohne Pufferzone. 16 mit den verarbeiteten Referenz-Bildausschnitten 12' im Rechner 8,8' verglichen werden, indem innerhalb jedes verarbeiteten aktuellen Bildausschnitts 14' mit oder ohne Pufferzone 16 nach dem entsprechenden verarbeiteten Referenz-Bildausschnitt 12' gesucht wird.

Das Überprüfungs-Verfahren umfasst vorzugsweise, dass für jedes Merkmal 10',10",10'" anhand von Ergebniswerten bestimmt wird, ob in Bezug auf Bildinhalt und Position der Merkmale 10',10",10'" eine Übereinstimmung zwischen der aktuellen und der ursprünglichen Anordnung von Laborartikeln 1 auf dem Arbeitsfeld 2 der Labor-Arbeitsstation 3 besteht. Dabei umfassen diese Ergebniswerte vorzugsweise eine Bildinhalts-Komponente, eine Ortskomponente in einer X-Richtung und eine Ortskomponente in einer Y-Richtung. Zudem wird bevorzugt, dass die Übereinstimmun jeder dieser zumindest drei Komponenten in Bezug auf je einen entsprechenden Schwellenwert bestimmt wird.

Speziell bevorzugt wird beim erfindungsgemässen Überprüfungs-Verfahren, dass jede perfekte Übereinstimmung als individuelles, dem entsprechenden aktuellen Bildausschnitt 14 zugeordnetes grünes Feld [bzw. Feld einer ersten Farbe] und jede genügende Übereinstimmung als individuelles, dem entsprechenden aktuellen Bildausschnitt 14 zugeordnetes oranges Feld [bzw. Feld einer zweiten Farbe] auf dem Bildschirm bzw. mit dem Bildanzeigegerät 9 angezeigt wird. Zudem wird speziell bevorzugt, dass jeder Fehler als Alarm angezeigt wird, wobei der Alarm ausgewählt ist aus einer Gruppe, die aus einem optischen Alarm (z.B. in Form einer Blinklampe, eines Icons, eines individuellen, dem entsprechenden aktuellen Bildausschnitt 12 zugeordneten roten Felds [bzw. Feld einer dritten Farbe] oder Warnfensters auf dem Bildschirm), einem akustischen Alarm (in der Form einer Sirene, eines Gongs, einer Glocke), einer Alarmmeldung (z.B. per E-mail, per SMS, als Computerprotokoll) und einer mechanischen Blockierung der Labor-Arbeitsstation 3 besteht.

Die Figur 8 zeigt das Resultat einer Überprüfung der Anordnung von Laborartikeln 1 auf einem Arbeitsfeld 2 einer Labor-Arbeitsstation mit angezeigten Übereinstimmungen und Fehlern. Gezeigt ist ein Streifenbild, das aus vier Referenz-Digitalbildern 6 zusammengesetzt worden ist.

Im Bereich des ersten Referenz-Digitalbilds 6 (von links) ist ganz links ein Waschtrog zum Waschen von Pipettenspitzen sichtbar. Der aktuelle Bildausschnitt 14 zeigt das korrekte Merkmal am richtigen Ort, dies erstaunt nicht, weil der Waschtrog auf dem Arbeitsfeld 2 angeschraubt ist und sich somit immer am richtigen Platz befindet. Dieser Waschtrog, bzw. sein charakteristisches Merkmal 10, kann als Referenzpunkt für eine direkte Initialisierung des Robotarms 4 oder zur Überprüfung einer bereits vorgenommenen Initialisierung verwendet werden.

Im Bereich des zweiten Referenz-Digitalbilds 6 (von links) sind keine Laborartikel platziert. Dafür sind hier charakteristische Merkmale des Arbeitsfelds 10', wie schwarzen Noppen, die einen Einschub-Slot auf dem Arbeitsfeld 2 definieren sichtbar.

Im Bereich des dritten Referenz-Digitalbilds 6 (vom links) ist ein Carrier 1 mit einem Rack Wegwerfpipettenspitzen in der ersten Position sichtbar. Der aktuelle Bildausschnitt 14 zeigt das korrekte Merkmal 10'" am richtigen Ort, so dass der Carrier 1 korrekt platziert ist. Allerdings fehlen insgesamt 4 Wegwerfpipettenspitzen (Disposable Tips = DiTi) die in einem Fehlerfenster als "DiTi Error" angezeigt werden. Zudem sind die Plätze dieser vier fehlenden Pipettenspitzen mit schwarzumrandeten (bevorzugt: rotumrandeten) Kreisflächen markiert. Bei einer bevorzugten Vorgehensweise beim Vorhandensein einer Parameterdatei zur DiTi-Überprüfung wird der angegebene Bereich mit einem Rand kopiert und auf Grundlage der vier eingegebenen Eckpunkte perspektivisch entzerrt. Das resultierende Bild wird in 8x12 Teilbereiche unterteilt. Analog wird mit der vom Lernprogramm erzeugten Referenz-Bildparameter-Datei verfahren. Jeder der 96 Teilbereiche wird nun auf Übereinstimmung mit den Teilbereichen gemäss der Referenz-Bildparameter-Datei geprüft. Es wird hier bevorzugt keine Vorverarbeitung mittels Sobel-Operator vorgenommen, da es sich zumeist um sehr dunkle, kantenarme Bilder handelt, bei denen eine etwaige Abweichung (= fehlendes DiTi) vor allem in der Farb-/Helligkeitsinformation zu sehen ist. Bei zu starker Abweichung (q < 0.350; vgl. unten) wird eine Warnmeldung mit der Position des fehlenden DiTis ausgegeben und die Stelle mit einem roten Kreis [bzw. Kreis einer dritten Farbe] markiert, andernfalls wird ein grüner Kreis [bzw. Kreis einer ersten Farbe] dargestellt (vgl. Fig. 3). Um falsch negative Meldungen zu umgehen, wird bevorzugt nicht der gesamte Teilbereich betrachtet, sondern ein Randbereich von 2-5 Pixeln ignoriert, da hier der Einfluss von benachbarten WegwerfPipettenspitzen (DiTis) am grössten ist.

Im Bereich des vierten Referenz-Digitalbilds 6 (von links) ist ein leerer Mikroplatten-Carrier 1 sichtbar. Der aktuelle Bildausschnitt 14 zeigt zwar das korrekte Merkmal (hier ein 2D-Barcode), aber es befindet sich nicht ganz am richtigen Ort, so dass der Carrier 1 nicht korrekt platziert ist. Tatsächlich ist er nicht ganz eingeschoben, so dass in einem Fehlerfenster eine "Warnung" angezeigt wird.

Die vorliegende Erfindung umfasst eine Labor-Arbeitsstation 3 mit mindestens einem Arbeitsfeld 2, die insbesondere zur Durchführung des Verfahrens zum Erfassen bzw. Überprüfen der Anordnung von Laborartikeln 1 auf diesem Arbeitsfeld 2 der Labor-Arbeitsstation 3 geeignet ist. Diese Labor-Arbeitsstation 3 umfasst (vgl. Anspruch 24):
n) zumindest eine oberhalb des Arbeitsfelds der Labor-Arbeitsstation 3 angeordnete Trägervorrichtung 4;
o) zumindest eine in einer definierten Position und Ausrichtung an der Trägervorrichtung 4 befestigte Digitalkamera 5,5';
p) einen mit der zumindest einen Digitalkamera 5,5' wirkverbundenen Rechner 8 mit einem ersten und zweiten Speicher 7,7';
q) ein mit dem Rechner (8) wirkverbundenes Bildanzeigegerät (9);
r) mindestens ein mit dem Rechner (8) wirkverbundenes Eingabegerät (11); und
s) ein im Rechner (8) aktivierbares Computerprogramm zur Durchführung des erfindungsgemässen Verfahrens zum Erfassen bzw. Überprüfen der Anordnung von Laborartikeln (1) auf diesem Arbeitsfeld (2) dieser Labor-Arbeitsstation (3).

Bei einer bevorzugten Labor-Arbeitsstation 3 ist das Arbeitsfeld 2 entsprechend einem kartesischen Koordinatensystem durch eine X-Achse und eine rechtwinklig dazu verlaufende Y-Achse definiert, wobei die Labor-Arbeitsstation 3 eine senkrecht zum Arbeitsfeld 2 verlaufende Z-Achse umfasst. Diese bevorzugte Labor-Arbeitsstation 3 ist dadurch gekennzeichnet, dass die zumindest eine Trägervorrichtung 4 mit den daran befestigten Digitalkameras 5,5' in der Richtung der X-Achse oder Y-Achse linear beweglich ausgebildet ist.

Bei einer alternativen Labor-Arbeitsstation 3 ist das Arbeitsfeld 2 entsprechend einem Polarkoordinatensystem durch ein Zentrum, einen Winkel und einen Distanzbereich in Bezug auf dieses Zentrum definiert (nicht gezeigt). Zusätzlich kann diese alternative Labor-Arbeitsstation 3 eine senkrecht zum Arbeitsfeld 2 verlaufende Z-Achse umfassen. Diese alternative Labor-Arbeitsstation 3 ist dadurch gekennzeichnet, dass die zumindest eine Trägervorrichtung 4 mit den daran befestigten Digitalkameras 5,5' um das Zentrum kreisförmig beweglich ausgebildet ist. Alternativ kann auch vorgesehen sein, dass an der Labor-Arbeitsstation 3 eine Trägervorrichtung 4 angeordnet ist, an der zwei Digitalkameras 5,5' in einem Abstand zueinander befestigt sind, oder dass an der Labor-Arbeitsstation 3 zwei Trägervorrichtungen 4 in einem Abstand zueinander angeordnet sind, wobei an jeder Trägervorrichtung 4 je eine Digitalkamera 5 befestigt ist.

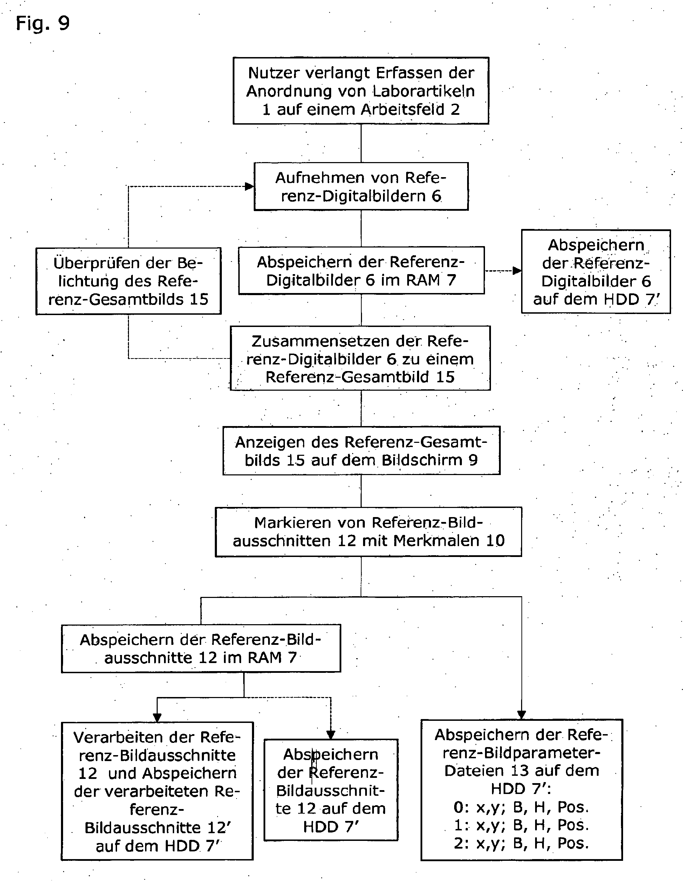

Die Figur 9 zeigt ein Flussdiagramm einer bevorzugten Ausführungsform des Erfassungs-Verfahrens. Es wird davon ausgegangen, dass das Arbeitsfeld 2 der Labor-Arbeitsstation 3 in gewünschter Weise aufgebaut worden ist. Dieser Aufbau wird - sobald der Nutzer das Erfassen dieser Anordnung der Laborartikel 1 verlangt - mit dem Lernprogramm erfasst. Hierzu werden vom Arbeitsfeld 2 mit wahlweise einer oder zwei Webcams 5,5' streifenweise Referenz-Digitalbilder 6 aufgenommen. Diese Referenz-Digitalbilder 6 werden zuerst im RAM 7 des Rechners 8 gespeichert (optional können diese Referenz-Digitalbilder 6 auch im HDD 7' des Rechners 8 gespeichert werden). Anschliessend werden die Referenz-Digitalbilder 6 zu einem Referenz-Gesamtbild 15 zusammengesetzt (optional kann die Belichtung des Referenzgesamtbilds 15 überprüft und ein erneutes Aufnehmen von Referenz-Digitalbildern 6 veranlasst werden). Das Referenz-Gesamtbild 15 wird auf dem Bildschirm 9 angezeigt, so dass das Markieren von Referenz-Bildausschnitten 12 anhand von charakteristischen Markmalen 10 erfolgen kann. Die Referenz-Bildausschnitte 12 werden anschliessend im RAM 7 des Rechners 8 gespeichert (optional können diese Referenz-Bildausschnitte 12 auch im HDD 7' des Rechners 8 gespeichert werden). Parallel dazu werden die Referenz-Bildparameter-Dateien 13 der Referenz- Bildausschnitte 12 auf dem HDD 7' des Rechners 8 gespeichert. Die Referenz-Bildausschnitte 12 werden anschliessend verarbeitet und im HDD 7' des Rechners 8 gespeichert. Als Resultat des Erfassungs-Verfahrens sind somit verarbeitete Referenz-Bildausschnitte 12' oder unverarbeitete Referenz-Bildausschnitte 12 sowie die entsprechenden Referenz-Bildparameter-Dateien 13 auf der Festplatte 7' des Rechners 8 abgespeichert und von dort abrufbar.

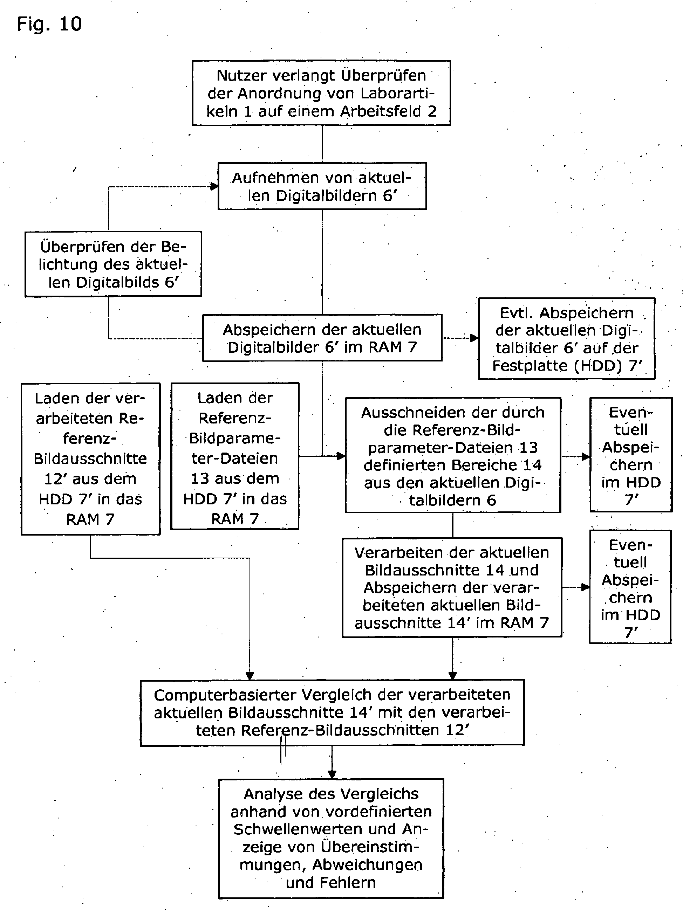

Die Figur 10 zeigt ein Flussdiagramm einer bevorzugten Ausführungsform des Überprüfungs-Verfahrens. Es wird davon ausgegangen, dass das Arbeitsfeld 2 der Labor-Arbeitsstation 3 zuvor in gewünschter Weise aufgebaut und mit dem Lernprogramm erfasst worden war. Zudem wird davon ausgegangen, dass inzwischen der ursprünglich erfasste Aufbau der Laborartikel beibehalten oder zumindest nicht wesentlich verändert, oder dass ein zumindest ähnlicher Aufbau der Laborartikel 1 vorgenommen worden ist. Dieser aktuelle Aufbau wird - sobald der Nutzer das Überprüfen dieser aktuellen Anordnung der Laborartikel 1 verlangt - mithilfe des Überprüfungsprogramms erfasst und mit der ursprünglich erfassten Anordnung der Laborartikel 1 verglichen. Hierzu werden vom aktuellen Arbeitsfeld 2 mit wahlweise einer oder zwei Webcams 5,5' streifenweise aktuelle Digitalbilder 6' aufgenommen. Diese aktuellen Digitalbilder 6' werden zuerst im RAM 7 des Rechners 8 gespeichert Optional kann die Belichtung der aktuellen Digitalbilder 6' überprüft und ein erneutes Aufnehmen und Abspeichern von aktuellen Digitalbildern 6' veranlasst werden (optional können die aktuellen Digitalbilder 6' auch im HDD 7' des Rechners 8 gespeichert werden). Die zuvor bei der Durchführung des Lernprogramms abgespeicherten Referenz-Bildparameter-Dateien 13 werden von der Festplatte 7' des Rechners 8 abgerufen und ebenfalls in den Arbeitsspeicher 7 des Rechners 8 geladen. Mithilfe dieser Referenz-Bildparameter-Dateien 13 werden definierte Bereiche bzw. aktuelle Bildausschnitte 14 aus den aktuellen Digitalbildern 6' ausgeschnitten (optional können diese aktuellen Bildausschnitte 14 im HDD 7' des Rechners 8 gespeichert werden). Anschliessend werden die aktuellen Bildausschnitte 14 verarbeitet und die verarbeiteten aktuellen Bildausschnitte 14' im RAM 7 des Rechners 8 gespeichert (optional können diese verarbeiteten aktuellen Bildausschnitte 14' im HDD 7' des Rechners 8 gespeichert werden). Nachdem die zuvor bei der Durchführung des Lernprogramms abgespeicherten verarbeiteten Referenz-Bildausschnitte 12' von der Festplatte 7' in den Arbeitsspeicher 7 des Rechners 8 geladen worden sind, wird ein computerbasierter Vergleich der verarbeiteten aktuellen Bildausschnitte 14' mit den verarbeiteten Referenz-Bildausschnitten 12' ausgeführt. Dieser Vergleich wird vom Überprüfungsprogramm analysiert und anhand von zuvor definierten Schwellenwerten werden Übereinstimmungen, Abweichungen und Fehler der aktuellen Anordnung von Laborartikeln 1 gegenüber der ursprünglichen Anordnung von Laborartikeln 1 auf dem Arbeitsfeld 2 der Labor-Arbeitsstation 3 angezeigt. Als Resultat des ÜberprüfungsVerfahrens wird dem Nutzer somit mitgeteilt, ob die Anordnung der Laborartikel 1 für die geplanten und mit der ursprünglichen Anordnung erfolgreich durchgeführten Versuche brauchbar ist oder nicht. Sollten auch nur geringe Abweichungen feststellbar sein, oder sollten sich auf dem Arbeitsfeld 2 gar unbekannte, also beim Erfassen der ursprünglichen Anordnung der Laborartikel 1 nicht anwesende Gegenstände (wie Werkzeuge, Notizblöcke, Handschuhe etc.) befinden, so wird der Nutzer entsprechend alarmiert.

Zum Vergleichen der verarbeiteten aktuellen Bildausschnitte 14' mit den verarbeiteten Referenz-Bildausschnitten 12' werden die prozessierten Bildbereiche mit der Funktion cvMatchTemplate mit dem Parameter CV_TM_CCOEFF_NORMED gematched. Anhand der erhaltenen Position des optimalen Matchings und des erhaltenen Qualitätswertes 0 ≤ q ≤ 1 (1 = perfekte Übereinstimmung) wird nun bestimmt, ob es sich um ein erfolgreiches oder fehlgeschlagenes Matching handelt. Erfolgreich ist ein Matching dann, wenn der X-Wert um weniger als 3 Pixel und der Y-Wert um weniger als 2 Pixel von der erwarteten Position abweicht und q ≥ 0.650 ist. Dies wird dem Benutzer auf einem Bild des Arbeitsfelds 2 durch ein grünes Rechteck [bzw. Rechteck einer ersten Farbe] angezeigt. Die unterschiedlichen Toleranzen in X-und Y-Richtung erklären sich daraus, dass die X-Position der Kamera abhängig von der Präzision des X-Antriebs des Robotarms 4 ist und somit möglicherweise etwas vom tatsächlichen X-Wert eines Carriers 1 abweichen kann. Der X-Wert der Carrier 1 kann sich, z.B. bei der Verwendung einer Freedom EVO^{®} Labor-Arbeitsstation 3 des Anmelders, bei gleichbleibenden sonstigen Parametern nur in Schritten von 2.5 cm ändern (diese Distanz entspricht dem Arbeitsfeld-Grid = Noppenabstand in X-Richtung). Der Y-Wert der fix montierten Kamera 5 dagegen sollte immer exakt gleich sein. Die Y-Werte der Carrier können in beliebig kleinen Schritten geändert werden, weil eine Verschiebung in Y-Richtung möglich ist. Ein nicht vollständig eingeschobener Carrier 1 stellt eine erhebliche Gefahr dar und muss daher stärker gewichtet werden. Stimmen nur die Positionswerte überein, während der q-Wert unter 0.650 liegt, wird eine Warnung in Form eines gelben Rechtecks ausgegeben.

Es ist recht schwierig, Millimeterangaben in Bezug auf die erreichbare Auflösung beim Feststellen einer geringfügigen Fehlplatzierung zu machen, weil die exakte Auflösung direkt abhängig ist von der Position der Kamera, von ihrer Optik und von der Auflösung ihres bildgebenden Sensors. Weitere Parameter, welche diese Auflösung mitbestimmen sind beispielsweise der Winkel, den das Objekt relativ zur optischen Achse einnimmt, der Abstand des Objekts zur Kamera etc. Selbst mit einer Kamera niedriger Auflösung (wie z.B. die 640 x 480 Pixel der verwendeten Webcam) können Fehlplatzierungen von 1 bis 2 mm erkannt werden, wobei die tolerierte Abweichung in jeder Dimension vorzugsweise einen einstellbaren Parameter darstellt.

Sind die Positionswerte überschritten, so wird dies durch ein rotes Rechteck [bzw. Rechteck einer dritten Farbe] angezeigt. Je nach Art der Überschreitung könnten hier auch spezifische Meldungen an den Nutzer gesendet werden, wie z.B.:
- in X-Richtung: Carrier im falschen Grid;
- in Y-Richtung: Carrier nicht komplett eingeschoben;
- in X-und Y-Richtung: Carrier nicht korrekt im Grid.

Speziell bevorzugt beim Durchführen des erfindungsgemässen Erfassungs- oder Überprüfungs-Verfahrens wird zumindest eine Ableitung der Graustufenbilder oder der Bilder des roten, grünen oder blauen Kanals eines Farbbilds in einer Richtung vollzogen. Vorzugsweise wird jedes Referenz-Graustufenbild 17 und jedes Aktueil-Graustufenbild 17' zumindest einer Ableitungsoperation unterworfen. Dabei kann diese Ableitungsoperation wahlweise in einer x-Richtung oder in einer y-Richtung vollzogen werden, wobei für die Ableitungsoperation auch andere Richtungen, wie z.B. 45° gewählt werden können. Zudem oder alternativ können für jede der drei Farbebenen R (rot), G (grün) oder B (blau) gesonderte Ableitungsoperationen in zumindest einer Richtung ausgeführt werden.

Wie beschrieben ist vorzugsweise ein erstes Computerprogramm für das Verfahren zum Erfassen der Anordnung von Laborartikeln 1 auf einem Arbeitsfeld 2 einer Labor-Arbeitsstation 3 (Lernprogramm) und ein zweites Computerprogramm für das Verfahren zum Überprüfen der Anordnung von Laborartikeln 1 auf einem Arbeitsfeld 2 einer Labor-Arbeitsstation 3 (Prüfprogramm) notwendig. Es kann jedoch auch vorgesehen sein, die beiden Computerprogramme in einem einzigen Anwendungsprogramm zusammenzufassen.

Alle verwendeten Bildverarbeitungsprogramme wurden unter MICROSOFT® Visual Studio 2010 mit C++ unter Verwendung der OpenCV-Library (V 2.1) und der ZBar-Library (V 0.1) programmiert. Die Steuerungsscripte für die Labor-Arbeitsstation 3 wurden in Freedom EVOware^{®} V 2.4SP1, Build 2.4.8.0 geschrieben.

Gleiche Bezugszeichen bezeichnen gleiche oder zumindest entsprechende Merkmale, auch wenn diese nicht in jedem Fall ausführlich beschrieben wurden. Die Wahl eines externen Computers, also eines separaten Rechners 8' oder die Verwendung des Rechners 8 der Labor-Arbeitsstation 3 ist dem Nutzer vorzugsweise freigestellt, so dass er sich - ohne vom Gedanken der vorliegenden Erfindung abzuweichen - des einen oder anderen Rechners bedienen kann.

Sollte sich ein Fachmann entscheiden, zum Durchführen des erfindungsgemässen Erfassungs- und/oder Überprüfungs-Verfahrens eine gemäss einem Polarkoordinaten-System konstruierte und arbeitende, alternative Labor-Arbeitsstation 3 zu verwenden, so wird er in Kenntnis der vorliegenden Erfindung einem Programmierfachmann den Auftrag erteilen, diese Verfahren entsprechend anzupassen und z.B. die Referenz-Bildparameter-Dateien 13 in Polarkoordination, also durch ein Zentrum, einen Winkel und eine Distanz in Bezug auf dieses Zentrum zu definieren.

**Bezugszeichenliste**

| | | | |
|---|---|---|---|
| 1 | Laborartikel, Mikroplatte, Carrier, Rack | 12 | Referenz-Bildausschnitt (ursprünglich) |
| 2 | Arbeitsfeld, erstes Arbeitsfeld | 12' | verarbeiteter Referenz-Bildausschnitt |
| 2' | zweites Arbeitsfeld | | |
| 3 | Labor-Arbeitsstation | 13 | Referenz-Bildparameter-Datei (ursprünglich) |
| 4,4' | Trägervorrichtung, Robotarm | | |
| 5,5' | Digitalkamera, Webcam | 14 | aktueller Bildausschnitt |
| 6 | Referenz-Digitalbild (ursprünglich) | 14' | verarbeiteter aktueller Bildausschnitt |
| 6' | aktuelles Digitalbild | | |
| 7 | erster Speicher (RAM) | 15 | Referenz-Gesamtbild |
| 7' | zweiter Speicher (HDD) | 15' | verarbeitetes Referenz-Gesamtbild |
| 8 | Rechner der RSP | | |
| 8' | separater Rechner | 16 | Pufferzone zu 14 |
| 9 | Bildschirm, Bildanzeigegerät | 17 | Referenz-Graustufenbild |
| 10 | charakteristisches Merkmal | 17' | Aktuell-Graustufenbild |
| 10' | Merkmale des Arbeitsfelds | 18 | Fadenkreuz |
| 10" | Merkmale der Laborartikel | 19 | optische Achse von 5 |
| 10'" | Merkmale zusätzlicher Markierungen | 19' | optische Achse von 5' |
| 11 | Eingabegerät | | |

## Patentansprüche

1. Verfahren zum Erfassen der Anordnung von Laborartikeln (1) auf einem Arbeitsfeld (2) einer Labor-Arbeitsstation (3), wobei oberhalb des Arbeitsfelds (2) der Labor-Arbeitsstation (3) zumindest eine Trägervorrichtung (4) angeordnet ist, und wobei das Verfahren die folgenden Arbeitsschritte umfasst:
a) Erfassen einer ursprünglichen Anordnung von Laborartikeln (1) auf dem Arbeitsfeld (2) der Labor-Arbeitsstation (3) mittels mindestens eines Referenz-Digitalbilds (6), wobei die Referenz-Digitalbilder (6) mit mindestens einer, an der Trägervorrichtung (4) in einer definierten Position und Ausrichtung befestigten, Digitalkamera (5) aufgenommenen werden;
b) Abspeichern dieses mindestens einen Referenz-Digitalbilds (6) in einem ersten Speicher (7) eines mit der Digitalkamera (5) wirkverbundenen Rechners (8,8');
c) Anzeigen des mindestens einen Referenz-Digitalbilds (6) auf einem mit dem Rechner (8,8') wirkverbundenen Bildanzeigegerät (9);
**dadurch gekennzeichnet, dass** anschliessend die folgenden Arbeitsschritte ausgeführt werden:
d) Auswählen und Markieren von charakteristischen auf dem mindestens einen Referenz-Digitalbild (6) sichtbaren Merkmalen (10) auf dem Arbeitsfeld (2) durch einen Benutzer, wobei die Merkmale (10) Orte mit hohem Kontrast sind und ausgewählt sind aus einer Gruppe, die aus Merkmalen des Arbeitsfelds (10'), aus Merkmalen der Laborartikel (10") und aus zusätzlich angebrachten Markierungen (10"') besteht, und wobei vom Benutzer zum Markieren der Merkmale (10) mindestens ein mit dem Rechner (8,8') wirkverbundenes Eingabegerät (11) verwendet wird;
e) Ziehen von Rechtecken angepasster Grösse um die markierten Merkmale (10', 10", 10"') und Bestätigen durch den Benutzer mittels des Eingabegeräts (11);
f) Erzeugen von Referenz-Bildausschnitten (12) entsprechend den in Schritt e) vom Benutzer bestätigten Rechteck-Bereichen um die markierten Merkmale (10) auf dem Arbeitsfeld (2) der Labor-Arbeitsstation (3);
g) Erzeugen von zumindest einer Referenz-Bildparameter-Datei (13) für diese in Schritt f) erzeugten Referenz-Bildausschnitte (12); und
h) Abspeichern der im Schritt f) erzeugten Referenz-Bildausschnitte (12) und der im Schritt g) erzeugten Referenz-Bildparameter-Datei(en) (13) in einem zweiten Speicher (7');
wobei die Laborartikel (1) ausgewählt sind aus einer Gruppe umfassend Behälter in der Form von Mikroplatten und Probenröhrchen, Träger zum Aufnehmen derartiger Behälter, Pipettenspitzen und/oder Pipettenspitzenmagazine.

2. Erfassungs-Verfahren nach Anspruch 1, **dadurch gekennzeichnet, dass** das Anzeigen des mindestens einen Referenz-Digitalbilds (6) auf einem mit dem Rechner (8,8') wirkverbundenen Bildanzeigegerät (9) mit der Aufforderung an den Benutzer erfolgt, relativ kleine, markante und für den Ablauf der geplanten Versuche wichtige Stellen auszuwählen und als Referenz-Bildausschnitte (12) zu markieren.

3. Erfassungs-Verfahren nach Anspruch 1 oder 2, **dadurch gekennzeichnet, dass** der Benutzer in Schritt e) mit einer Computer-Maus (11) in ihrer Grösse angepasste und auf dem Bildschirm angezeigte Rechtecke um diese Merkmale (10',10") oder Markierungen (10"') zieht und die Auswahl mit einem Mausklick oder mit dem Drücken einer beliebigen, vorgängig festgelegten Taste einer Computer-Tastatur bestätigt.

4. Erfassungs-Verfahren nach einem der Ansprüche 1 bis 3, **dadurch gekennzeichnet, dass** die ursprüngliche Anordnung von Laborartikeln (1) auf dem Arbeitsfeld (2) der Labor-Arbeitsstation (3) mittels zweier Digitalkameras (5,5') erfasst wird, die in einem Abstand zueinander an derselben Trägervorrichtung (4) befestigt sind.

5. Erfassungs-Verfahren nach einem der Ansprüche 1 bis 3, **dadurch gekennzeichnet, dass** die ursprüngliche Anordnung von Laborartikeln (1) auf dem Arbeitsfeld (2) der Labor-Arbeitsstation (3) mittels zweier Digitalkameras (5,5') erfasst wird, wobei diese Digitalkameras (5) an zwei unterschiedlichen, in einem Abstand zueinander angeordneten Trägervorrichtungen (4,4') befestigt sind.

6. Erfassungs-Verfahren nach einem der vorhergehenden Ansprüche, **dadurch gekennzeichnet, dass** zum Erfassen der ursprünglichen Anordnung von Laborartikeln (1) auf dem Arbeitsfeld (2) der Labor-Arbeitsstation (3) die zumindest eine Trägervorrichtung (4) mit daran befestigten ein oder zwei Digitalkameras (5,5') an zumindest zwei Aufnahmeorte bewegt wird, wobei an jedem dieser Aufnahmeorte mit jeder dieser Digitalkameras (5,5') ein Referenz-Digitalbild (6) aufgenommen wird.

7. Erfassungs-Verfahren nach Anspruch 6, **dadurch gekennzeichnet, dass** das Bewegen der Digitalkameras (5,5') zu den Aufnahmeorten und die Aufnahme der Referenz-Digitalbilder (6) an den Aufnahmeorten von einer Software der Labor-Arbeitsstation (3) gesteuert wird.

8. Erfassungs-Verfahren nach einem der vorhergehenden Ansprüche, **dadurch gekennzeichnet, dass** jede der im Schritt g) erzeugten ReferenzBildparameter-Dateien (13) X/Y-Parameter bzw. Polarkoordinaten des entsprechenden Referenz-Bildausschnitts (12) umfasst.

9. Erfassungs-Verfahren nach einem der vorhergehenden Ansprüche, **dadurch gekennzeichnet, dass** die Referenz-Digitalbilder (6) zu einem Referenz-Gesamtbild (15) zusammengesetzt werden.

10. Erfassungs-Verfahren nach einem der vorhergehenden Ansprüche, **dadurch gekennzeichnet, dass** die Belichtung der Referenz-Digitalbilder (6) oder des Referenz-Gesamtbilds (15) überprüft wird, wonach bei Über- oder Unterbelichtung der Referenz-Digitalbilder (6) oder des Referenz-Gesamtbilds (15) einer der folgenden alternativen Schritte ausgeführt wird:
• der Benutzer wird aufgefordert,
• es erfolgt eine Anweisung an eine Steuerung,
• es erfolgt automatisch ein Befehl an eine Steuerung,
die ursprüngliche Anordnung von Laborartikeln (1) auf dem Arbeitsfeld (2) der Labor-Arbeitsstation (3) erneut zu erfassen.

11. Verfahren zum Überprüfen der Anordnung von Laborartikeln (1) auf einem Arbeitsfeld (2) einer Labor-Arbeitsstation (3), wobei eine aktuelle Anordnung von Laborartikeln (1) mit einer zuvor gemäss einem der Ansprüche 1 bis 10 erfassten, ursprünglichen Anordnung von Laborartikeln (1) auf dem Arbeitsfeld (2) dieser Labor-Arbeitsstation (3) verglichen wird, **dadurch gekennzeichnet, dass** das Verfahren das Erzeugen von unverarbeiteten Referenz-Bildausschnitten (12) oder verarbeiteten Referenz-Bildausschnitten (12') oder das Erzeugen eines unverarbeiteten Referenz-Gesamtbilds (15) oder eines verarbeiteten Referenz-Gesamtbilds (15') und jeweils entsprechenden Referenz-Bildparameter-Dateien (13) für die ursprüngliche Anordnung von Laborartikeln (1), ausgewählt aus einer Gruppe umfassend Behälter in der Form von Mikroplatten und Probenröhrchen, Träger zum Aufnehmen derartiger Behälter, Pipettenspitzen und/oder Pipettenspitzenmagazine, auf dem Arbeitsfeld (2) dieser Labor-Arbeitsstation (3) umfasst,
wobei das Überprüfungsverfahren die folgenden Schritte umfasst:
i) Erfassen einer aktuellen Anordnung von Laborartikeln (1) auf dem Arbeitsfeld (2) der Labor-Arbeitsstation (3) mittels mindestens eines aktuellen Digitalbilds (6'), wobei die aktuellen Digitalbilder (6') mit der mindestens einen, an der Trägervorrichtung (4) in einer definierten Position und Ausrichtung befestigten, Digitalkamera (5,5') aufgenommenen werden;
j) Abspeichern dieses mindestens einen aktuellen Digitalbilds (6') im ersten Speicher (7) des mit der mindestens einen Digitalkamera (5,5') wirkverbundenen Rechners (8,8');
k) Laden der verarbeiteten Referenz-Bildausschnitte (12') oder des verarbeiteten Referenz-Gesamtbilds (15') sowie Laden der entsprechenden Referenz-Bildparameter-Dateien (13) vom zweiten Speicher (7') in den ersten Speicher (7) des Rechners (8,8');
l) Erstellen von aktuellen Bildausschnitten (14) aus den aktuellen Digitalbildern (6'), wobei diese aktuellen Bildausschnitte (14) durch X/Y-Parameter der Referenz-Bildparameter-Dateien (13) definiert werden;
m) Verarbeiten der aktuellen Bildausschnitte (14) entsprechend den verarbeiteten Referenz-Bildausschnitten (12'); und
n) Abspeichern der verarbeiteten aktuellen Bildausschnitte (14') im ersten Speicher (7) des Rechners (8,8').

12. Überprüfungs-Verfahren nach Anspruch 11, **dadurch gekennzeichnet, dass** im Anschluss an den Schritt h) die Belichtung der aktuellen Digitalbilder (6') überprüft wird, wonach bei Über- oder Unterbelichtung der aktuellen Digitalbilder (6') einer der folgenden alternativen Schritte ausgeführt wird:
• der Benutzer wird aufgefordert,
• es erfolgt eine Anweisung an eine Steuerung,
• es erfolgt automatisch ein Befehl an eine Steuerung,
die aktuelle Anordnung von Laborartikeln (1) auf dem Arbeitsfeld (2) der Labor-Arbeitsstation (3) erneut zu erfassen.

13. Überprüfungs-Verfahren nach Anspruch 11, **dadurch gekennzeichnet, dass** beim Erstellen der durch die X/Y-Parameter bzw. die Polarkoordinaten der Referenz-Bildparameter-Dateien (13) definierten aktuellen Bildausschnitte (14) aus den aktuellen Digitalbildern (6') im Schritt j) zusätzlich eine diese aktuellen Bildausschnitte (14) umgebende Pufferzone (16) addiert wird.

14. Überprüfungs-Verfahren nach einem der Ansprüche 11 bis 13, **dadurch gekennzeichnet, dass** von jedem Referenz-Bildausschnitt (12) oder Referenz-Gesamtbild (15) ein Referenz-Graustufenbild (17) erstellt und jedes Referenz-Graustufenbild (17) eines Referenz-Bildausschnitts (12) oder Referenz-Gesamtbilds (15) und/oder jede Farbebene R (rot), G (grün) oder B (blau) eines farbigen Referenz-Bildausschnitts (12) oder Referenz-Gesamtbilds (15) zumindest einer Ableitungsoperation unterworfen wird.

15. Überprüfungs-Verfahren nach Anspruch 11 oder 13, **dadurch gekennzeichnet, dass** die im Schritt l) verarbeiteten aktuellen Bildausschnitte (14') mit oder ohne Pufferzone (16) mit den verarbeiteten Referenz-Bildausschnitten (12') im Rechner (8,8') verglichen werden, indem innerhalb jedes verarbeiteten aktuellen Bildausschnitts (14') mit oder ohne Pufferzone (16) nach dem entsprechenden verarbeiteten Referenz-Bildausschnitt (12') gesucht wird.

16. Überprüfungs-Verfahren nach Anspruch 15, **dadurch gekennzeichnet, dass** für jedes Merkmal (10',10",10'") anhand von Ergebniswerten bestimmt wird, ob in Bezug auf Bildinhalt und Position der Merkmale (10',10",10"') eine Übereinstimmung zwischen der aktuellen Anordnung von Laborartikeln (1) und der ursprünglichen Anordnung von Laborartikeln (1) auf dem Arbeitsfeld (2) der Labor-Arbeitsstation (3) besteht, wobei diese Ergebniswerte eine Bildinhalts-Komponente, eine Ortskomponente in einer X-Richtung und eine Ortskomponente in einer Y-Richtung bzw. Polarkoordinaten entsprechende Ortskomponenten umfassen, und wobei die Übereinstimmung jeder dieser zumindest drei Komponenten in Bezug auf je einen entsprechenden Schwellenwert bestimmt wird.

17. Überprüfungs-Verfahren nach Anspruch 16, **dadurch gekennzeichnet, dass** jede perfekte Übereinstimmung mit Qualitätswert q = 1 als individuelles, dem entsprechenden aktuellen Bildausschnitt (14) zugeordnetes Feld einer ersten Farbe und jede genügende Übereinstimmung mit Qualitätswert q ≥ 0.650 als individuelles, dem entsprechenden aktuellen Bildausschnitt (14) zugeordnetes Feld einer zweiten Farbe auf dem Bildanzeigegerät (9) angezeigt wird.

18. Überprüfungs-Verfahren nach Anspruch 17, **dadurch gekennzeichnet, dass** jeder Fehler als Alarm angezeigt wird, wobei ein Fehler bedeutet, dass keine genügende Übereinstimmung mit Qualitätswert q ≥ 0.650 festgestellt worden ist, und wobei der Alarm ausgewählt ist aus einer Gruppe, die aus einem optischen Alarm, einem akustischen Alarm, einer Alarmmeldung und einer mechanischen Blockierung der Labor-Arbeitsstation (3) besteht.

19. Labor-Arbeitsstation (3) mit mindestens einem Arbeitsfeld (2), insbesondere zur Durchführung eines Verfahrens zum Erfassen bzw. Überprüfen der Anordnung von Laborartikeln (1) auf diesem Arbeitsfeld (2) der Labor-Arbeitsstation (3), wobei die Labor-Arbeitsstation (3) umfasst:
o) zumindest eine oberhalb des Arbeitsfelds (2) der Labor-Arbeitsstation (3) angeordnete Trägervorrichtung (4);
p) zumindest eine in einer definierten Position und Ausrichtung an der Trägervorrichtung (4) befestigte Digitalkamera (5,5');
q) einen mit der zumindest einen Digitalkamera (5) wirkverbundenen Rechner (8) mit einem ersten und zweiten Speicher (7,7');
r) ein mit dem Rechner (8) wirkverbundenes Bildanzeigegerät (9); und
s) mindestens ein mit dem Rechner (8) wirkverbundenes Eingabegerät (11);
**dadurch gekennzeichnet, dass** die Labor-Arbeitsstation (3) zudem umfasst:
t) ein im Rechner (8) aktivierbares Computerprogramm zur Durchführung des Verfahrens zum Erfassen bzw. Überprüfen der Anordnung von Laborartikeln (1) auf diesem Arbeitsfeld (2) dieser Labor-Arbeitsstation (3), umfassend die Schritte a) bis h):
a) Erfassen einer ursprünglichen Anordnung von Laborartikeln (1) auf dem Arbeitsfeld (2) der Labor-Arbeitsstation (3) mittels mindestens eines Referenz-Digitalbilds (6), wobei die Referenz-Digitalbilder (6) mit mindestens einer, an der Trägervorrichtung (4) in einer definierten Position und Ausrichtung befestigten, Digitalkamera (5) aufgenommenen werden;
b) Abspeichern dieses mindestens einen Referenz-Digitalbilds (6) in einem ersten Speicher (7) eines mit der Digitalkamera (5) wirkverbundenen Rechners (8,8');
c) Anzeigen des mindestens einen Referenz-Digitalbilds (6) auf einem mit dem Rechner (8,8') wirkverbundenen Bildanzeigegerät (9);
d) Auswählen und Markieren von charakteristischen auf dem mindestens einen Referenz-Digitalbild (6) sichtbaren Merkmalen (10) auf dem Arbeitsfeld (2) durch einen Benutzer, wobei die Merkmale (10) Orte mit hohem Kontrast sind und ausgewählt sind aus einer Gruppe, die aus Merkmalen des Arbeitsfelds (10'), aus Merkmalen der Laborartikel (10") und aus zusätzlich angebrachten Markierungen (10"') besteht, und wobei vom Benutzer zum Markieren der Merkmale (10) mindestens ein mit dem Rechner (8,8') wirkverbundenes Eingabegerät (11) verwendet wird;
e) Ziehen von Rechtecken angepasster Grösse um die markierten Merkmale (10', 10", 10"') und Bestätigen durch den Benutzer mittels des Eingabegeräts (11);
f) Erzeugen von Referenz-Bildausschnitten (12) entsprechend den in Schritt e) vom Benutzer bestätigten Rechteck-Bereichen um die markierten Merkmale (10) auf dem Arbeitsfeld (2) der Labor-Arbeitsstation (3);
g) Erzeugen von zumindest einer Referenz-Bildparameter-Datei (13) für diese in Schritt f) erzeugten Referenz-Bildausschnitte (12); und
h) Abspeichern der im Schritt f) erzeugten Referenz-Bildausschnitte (12) und der im Schritt g) erzeugten Referenz-Bildparameter-Datei(en) (13) in einem zweiten Speicher (7');
wobei die Laborartikel (1) ausgewählt sind aus einer Gruppe umfassend Behälter in der Form von Mikroplatten und Probenröhrchen, Träger zum Aufnehmen derartiger Behälter, Pipettenspitzen und/oder Pipettenspitzenmagazine.

20. Labor-Arbeitsstation (3) nach Anspruch 19, **dadurch gekennzeichnet, dass** das im Rechner (8) aktivierbare Computerprogramm zur Durchführung des Verfahrens zum Erfassen bzw. Überprüfen der Anordnung von Laborartikeln (1) auf dem Arbeitsfeld (2) der Labor-Arbeitsstation (3) zusätzlich die folgenden Schritte i) bis n) umfasst:
i) Erfassen einer aktuellen Anordnung von Laborartikeln (1) auf dem Arbeitsfeld (2) der Labor-Arbeitsstation (3) mittels mindestens eines aktuellen Digitalbilds (6'), wobei die aktuellen Digitalbilder (6') mit der mindestens einen, an der Trägervorrichtung (4) in einer definierten Position und Ausrichtung befestigten, Digitalkamera (5,5') aufgenommenen werden;
j) Abspeichern dieses mindestens einen aktuellen Digitalbilds (6') im ersten Speicher (7) des mit der mindestens einen Digitalkamera (5,5') wirkverbundenen Rechners (8,8');
k) Laden der verarbeiteten Referenz-Bildausschnitte (12') oder des verarbeiteten Referenz-Gesamtbilds (15') sowie Laden der entsprechenden Referenz-Bildparameter-Dateien (13) vom zweiten Speicher (7') in den ersten Speicher (7) des Rechners (8,8');
l) Erstellen von aktuellen Bildausschnitten (14) aus den aktuellen Digitalbildern (6'), wobei diese aktuellen Bildausschnitte (14) durch X/Y-Parameter der Referenz-Bildparameter-Dateien (13) definiert werden;
m) Verarbeiten der aktuellen Bildausschnitte (14) entsprechend den verarbeiteten Referenz-Bildausschnitten (12'); und
n) Abspeichern der verarbeiteten aktuellen Bildausschnitte (14') im ersten Speicher (7) des Rechners (8,8').

21. Labor-Arbeitsstation (3) nach Anspruch 19, wobei das Arbeitsfeld (2) durch eine X-Achse und eine rechtwinklig dazu verlaufende Y-Achse definiert ist, und wobei die Labor-Arbeitsstation (3) eine senkrecht zum Arbeitsfeld (2) verlaufende Z-Achse umfasst, **dadurch gekennzeichnet, dass** die zumindest eine Trägervorrichtung (4) mit den daran befestigten Digitalkameras (5,5') in der Richtung der X-Achse oder Y-Achse linear beweglich ausgebildet ist.

## Claims

1. A method for determining the arrangement of laboratory articles (1) on a working area (2) of a laboratory workstation (3), wherein at least one carrier apparatus (4) is arranged above the working area (2) of the laboratory workstation (3), and wherein the method comprises the following work steps:
a) determining an original arrangement of laboratory articles (1) on the working area (2) of the laboratory workstation (3) by means of at least one reference digital image (6), wherein the reference digital images (6) are recorded by means of at least one digital camera (5) which is fixed to the carrier apparatus (4) in a defined position and orientation;
b) storing said at least one reference digital image (6) in a first memory (7) of a computer (8, 8') which is operatively connected to the digital camera (5);
c) displaying the at least one reference digital image (6) on an image display device (9) which is operatively connected to the computer (8, 8');
**characterized in that** the following work steps are carried out subsequently:
d) selecting and marking characteristic features (10), which are visible on the at least one reference digital image (6) on the working area (2) by a user, wherein the features (10) are locations with high contrast and are selected from a group which consists of features of the working area (10'), features of the laboratory articles (10") and additionally applied markings (10"'), and wherein at least one input device (11) which is operatively connected to the computer (8, 8') is used by the user for marking the features (10);
e) drawing of rectangles of adjusted size around the marked features (10', 10", 10"') and confirmation by the user by means of the input device (11);
f) producing reference image sections (12) according to the rectangular regions confirmed by the user in step e) around the marked features (10) on the working area (2) of the laboratory workstation (3);
g) producing at least one reference image parameter file (13) for said reference image sections (12) produced in step f); and
h) storing the reference image sections (12) produced in step f) and the reference image parameter file(s) (13) produced in step g) in a second memory (7');
wherein the laboratory articles (1) are selected from a group comprising containers in form of microplates and test tubes, carriers for accommodating such containers, pipette tips and/or pipette tip magazines.

2. Determination method according to claim 1, **characterized in that** the display of the at least one reference digital image (6) on an image display device (9) which is operatively connected to the computer (8, 8') is made with the request to the user to select relatively small and distinctive points which are important for the sequence of the planned tests and to mark them as reference image sections (12).

3. Determination method according to claim 1 or 2, **characterized in that** the user draws in step e) by means of a computer mouse (11) rectangles around said features (10', 10") or markings (10"'), which are adjusted with respect to their size and displayed on the screen, and confirms the selection with a mouse click or by pressing a random, previously determined key of a computer keyboard.

4. Determination method according to one of the claims 1 to 3, **characterized in that** the original arrangement of laboratory articles (1) on the working area (2) of the laboratory workstation (3) is determined by means of two digital cameras (5, 5') which are fixed at a distance from each other on the same carrier apparatus (4).

5. Determination method according to one of the claims 1 to 3, **characterized in that** the original arrangement of laboratory articles (1) on the working area (2) of the laboratory workstation (3) is determined by means of two digital cameras (5, 5'), wherein said digital cameras (5) are fixed to two different carrier apparatuses (4, 4') which are arranged at a distance from each other.

6. Determination method according to one of the preceding claims, **characterized in that** for determining the original arrangement of laboratory articles (1) on the working area (2) of the laboratory workstation (3) the at least one carrier apparatus (4), with one or two digital cameras (5, 5') fastened thereto, is moved to at least two recording locations, wherein a reference digital image (6) is recorded at each of these recording locations with each of said digital cameras (5, 5').

7. Determination method according to claim 6, **characterized in that** the movement of the digital cameras (5, 5') to the recording locations and the recording of the reference digital images (6) at the recording locations is controlled by a software of the laboratory workstation (3).

8. Determination method according to one of the preceding claims, **characterized in that** each of the reference image parameter files (13) produced in step g) comprises X/Y parameters or polar coordinates of the respective reference image section (12).

9. Determination method according to one of the preceding claims, **characterized in that** the reference digital images (6) are assembled into a reference total image (15).

10. Determination method according to one of the preceding claims, **characterized in that** the exposure of the reference digital images (6) or the reference total image (15) is checked, whereupon one of the following alternative steps is carried out in the case of overexposure or underexposure of the reference digital images (6) or the reference total image (15):
- the user is queried;
- an instruction is made to a controller;
- a command is automatically sent to a controller;
to again determine the original arrangement of laboratory articles (1) on the working area (2) of the laboratory workstation (3).

11. A method for testing the arrangement of laboratory articles (1) on a working area (2) of a laboratory workstation (3), wherein a current arrangement of laboratory articles (1) is compared with an original arrangement of laboratory articles (1) on the working area (2) of said laboratory workstation (3), as previously determined according to one of the claims 1 to 10, **characterized in that** the method comprises the production of unprocessed reference image sections (12) or processed reference image sections (12'), or the production of an unprocessed reference total image (15) or a processed reference total image (15'), and respective reference image parameter files (13) for the original arrangement of laboratory articles (1), selected from a group comprising containers in the form of microplates and test tubes, carriers for accommodating such containers, pipette tips and/or pipette tip magazines, on the working area (2) of said laboratory workstation (3), wherein the testing method comprises the following steps:
i) determining a current arrangement of laboratory articles (1) on the working area (2) of the laboratory workstation (3) by means of at least one current digital image (6'), wherein the current digital images (6') are recorded by means of the at least one digital camera (5, 5') which is fixed to the carrier apparatus (4) in a defined position and orientation;
j) storing said at least one current digital image (6') in the first memory (7) of the computer (8, 8') which is operatively connected to the at least one digital camera (5, 5');
k) loading of the processed reference image sections (12') or the processed reference total image (15') as well as loading the respective reference image parameter files (13) from the second memory (7') into the first memory (7) of the computer (8, 8');
l) producing current image sections (14) from the current digital images (6'), wherein said current image sections (14) are defined by X/Y parameters of the reference image parameter files (13);
m) processing the current image sections (14) according to the processed reference image sections (12'); and
n) storing the processed current image sections (14') in the first memory (7) of the computer (8, 8').

12. Testing method according to claim 11, **characterized in that** after the step h) the exposure of the current digital images (6') is checked, whereupon one of the following alternative steps is carried out in the case of overexposure or underexposure of the current digital images (6'):
- the user is queried;
- an instruction is made to a controller;
- a command is automatically sent to a controller;
to again determine the current arrangement of laboratory articles (1) on the working area (2) of the laboratory workstation (3).

13. Testing method according to claim 11, **characterized in that** during the production of the current image sections (14), which are defined by the X/Y parameters or the polar coordinates of the reference image parameter files (13) from the current digital images (6'), a buffer zone (16) surrounding said current image sections (14) is additionally added in step j).

14. Testing method according to one of the claims 11 to 13, **characterized in that** a reference greyscale image (17) is produced from each reference image section (12) or reference total image (15), and each reference greyscale image (17) of a reference image section (12) or reference total image (15) and/or each colour level R (red), G (green) or B (blue) of a coloured reference image section (12) or reference total image (15) is subjected to at least one derivational operation.

15. Testing method according to one of the claims 11 or 13, **characterized in that** the current image sections (14') processed in the step l) with or without buffer zone (16) are compared with the processed reference image sections (12') in the computer (8, 8'), **in that** the respectively processed reference image section (12') is sought within each processed current image section (14') with or without buffer zone (16).

16. Testing method according to claim 15, **characterized in that** it is determined for each feature (10', 10", 10"') on the basis of result values whether there is conformity between the current arrangement of laboratory articles (1) and the original arrangement of laboratory articles (1) on the working area (2) of the laboratory workstation (3) with respect to image content and position of the features (10', 10", 10"'), wherein said result values comprise an image content component, a positional component in an X direction and a positional component in a Y direction or positional components corresponding to polar coordinates, and wherein the conformity of each of these at least three components is determined with respect to one corresponding threshold value each.

17. Testing method according to claim 16, **characterized in that** each perfect conformity with the quality value q = 1 is displayed on the image display device (9) as an individual field of a first colour associated with the respective current image section (14), and each adequate conformity with the quality value q ≥ 0.650 is displayed on said display device as an individual field of a second colour associated with the respective current image section (14).

18. Testing method according to claim 17, **characterized in that** each error is displayed as an alarm, wherein an error means that no adequate conformity with the quality value q ≥ 0.650 was determined, and wherein the alarm is selected from a group which consists of an optical alarm, an acoustic alarm, an alarm signal and mechanical blocking of the laboratory workstation (3).

19. A laboratory workstation (3), comprising at least one working area (2), especially for carrying out a method for determining and testing the arrangement of laboratory articles (1) on said working area (2) of the laboratory workstation (3), wherein the laboratory workstation (3) comprises:
o) at least one carrier apparatus (4) arranged above the working area (2) of the laboratory workstation (3);
p) at least one digital camera (5, 5') which is fixed in a defined position and orientation on the carrier apparatus (4);
q) a computer (8) which comprises a first and second memory (7, 7') and is operatively connected to the at least one digital camera (5);
r) an image display device (9) operatively connected to the computer (8); and
s) at least one input device (11) operatively connected to the computer (8);
**characterized in that** the laboratory workstation (3) further comprises:
t) a computer program that can be activated in the computer (8) for carrying out the method for determining and testing the arrangement of laboratory articles (1) on said working area (2) of said laboratory workstation (3), comprising the steps a) to h);
a) determining an original arrangement of laboratory articles (1) on the working area (2) of the laboratory workstation (3) by means of at least one reference digital image (6), wherein the reference digital images (6) are recorded by means of at least one digital camera (5) which is fixed to the carrier apparatus (4) in a defined position and orientation;
b) storing said at least one reference digital image (6) in a first memory (7) of a computer (8, 8') which is operatively connected to the digital camera (5);
c) displaying the at least one reference digital image (6) on an image display device (9) which is operatively connected to the computer (8, 8');
d) selecting and marking characteristic features (10), which are visible on the at least one reference digital image (6) on the working area (2) by a user, wherein the features (10) are locations with high contrast and are selected from a group which consists of features of the working area (10'), features of the laboratory articles (10") and additionally applied markings (10"'), and wherein at least one input device (11) which is operatively connected to the computer (8, 8') is used by the user for marking the features (10);
e) drawing of rectangles of adjusted size around the marked features (10', 10", 10"') and confirmation by the user by means of the input device (11);
f) producing reference image sections (12) according to the rectangular regions confirmed by the user in step e) around the marked features (10) on the working area (2) of the laboratory workstation (3);
g) producing at least one reference image parameter file (13) for said reference image sections (12) produced in step f); and
h) storing the reference image sections (12) produced in step f) and the reference image parameter file(s) (13) produced in step g) in a second memory (7');
wherein the laboratory articles (1) are selected from a group comprising containers in form of microplates and test tubes, carriers for accommodating such containers, pipette tips and/or pipette tip magazines.

20. Laboratory workstation (3) according to claim 19, **characterized in that** the computer program that can be activated in the computer (8) for carrying out the method for determining and testing the arrangement of laboratory articles (1) on the working area (2) of the laboratory workstation (3) additionally comprises the following steps i) to n):
i) determining a current arrangement of laboratory articles (1) on the working area (2) of the laboratory workstation (3) by means of at least one current digital image (6'), wherein the current digital images (6') are recorded by means of the at least one digital camera (5, 5') which is fixed to the carrier apparatus (4) in a defined position and orientation;
j) storing said at least one current digital image (6') in the first memory (7) of the computer (8, 8') which is operatively connected to the at least one digital camera (5, 5');
k) loading of the processed reference image sections (12') or the processed reference total image (15') as well as loading the respective reference image parameter files (13) from the second memory (7') into the first memory (7) of the computer (8, 8');
l) producing current image sections (14) from the current digital images (6'), wherein said current image sections (14) are defined by X/Y parameters of the reference image parameter files (13);
m) processing the current image sections (14) according to the processed reference image sections (12'); and
n) storing the processed current image sections (14') in the first memory (7) of the computer (8, 8').

21. Laboratory workstation (3) according to claim 19, wherein the working area (2) is defined by an X axis and a Y axis extending at a right angle thereto, and wherein the laboratory workstation (3) comprises a Z axis extending perpendicularly to the working area (2), **characterized in that** the at least one carrier apparatus (4) with the digital cameras (5, 5') which are attached thereto are adapted to be linearly movable in the direction of the X axis or the Y axis.

## Revendications

1. Procédé pour détecter l'agencement d'articles de laboratoire (1) sur une zone de travail (2) d'un poste de travail de laboratoire (3), au moins un dispositif de support (4) étant agencé au-dessus de la zone de travail (2) du poste de travail de laboratoire (3) et le procédé comprenant les étapes suivantes :
a) détecter un agencement d'origine des articles de laboratoire (1) sur une zone de travail (2) du poste de travail de laboratoire (3) à l'aide d'au moins une image numérique de référence (6), les images numériques de référence (6) étant prises par au moins un appareil photo numérique (5) fixé sur le dispositif de support (4) dans une position et une orientation définies ;
b) sauvegarder cette au moins une image numérique de référence (6) dans une première mémoire (7) d'un ordinateur (8, 8') en liaison active avec l'appareil photo numérique (5) ;
c) afficher la au moins une image numérique de référence (6) sur un appareil d'affichage d'images (9) en liaison active avec l'ordinateur (8, 8') ;
**caractérisé en ce qu'**on réalise ensuite les étapes suivantes :
d) sélectionner et marquer par un utilisateur des caractéristiques (10) visibles sur la au moins une image numérique de référence (6) sur la zone de travail (2), les caractéristiques (10) étant des endroits présentant un fort contraste et étant choisies à partir d'un groupe composé de caractéristiques de la zone de travail (10'), de caractéristiques des articles de laboratoire (10") et de marquages supplémentaires (10"'), l'utilisateur utilisant pour indiquer les caractéristiques (10) au moins un périphérique d'entrée (11) en liaison active avec l'ordinateur (8, 8') ;
e) tracer des rectangles de taille adaptée autour des caractéristiques marquées (10', 10", 10"') et confirmer par l'utilisateur à l'aide du périphérique d'entrée (11) ;
f) générer des sections d'image de référence (12) conformément aux zones rectangulaires confirmées par l'utilisateur à l'étape e) autour des caractéristiques marquées (10) sur la zone de travail (2) du poste de travail de laboratoire (3) ;
g) générer au moins un fichier de paramètres d'image de référence (13) pour les sections d'image de référence (12) générées à l'étape f) ; et
h) sauvegarder les sections d'image de référence (12) générées à l'étape f) et le ou les fichiers de paramètres d'image de référence (13) généré(s) à l'étape g) dans une deuxième mémoire (7') ;
les articles de laboratoire (1) étant choisis à partir d'un groupe comprenant des récipients sous la forme de plaques de microtitration et de tubes à essai, des supports pour recevoir les récipients en question, des embouts de pipettes et/ou des magasins d'embouts de pipettes.

2. Procédé de détection selon la revendication 1, **caractérisé en ce que** l'affichage de la au moins une image numérique de référence (6) sur un appareil d'affichage d'images (9) en liaison active avec l'ordinateur (8, 8') se fait **en ce qu'**on demande à l'utilisateur de sélectionner des points relativement petits, notables et importants pour le déroulement des essais prévus et de les marquer comme des sections d'image de référence (12).

3. Procédé de détection selon la revendication 1 ou 2, **caractérisé en ce que** l'utilisateur dans l'étape e) trace avec une souris d'ordinateur (11) un rectangle de dimension adaptée qui s'affiche sur l'écran autour de ces caractéristiques (10', 10") ou de ces marquages (10"') et confirme son choix en cliquant sur la souris ou en appuyant sur une touche déterminée au préalable d'un clavier d'ordinateur.

4. Procédé de détection selon l'une des revendications 1 à 3, **caractérisé en ce que** l'agencement d'origine des articles de laboratoire (1) sur la zone de travail (2) du poste de travail de laboratoire (3) est détecté par deux appareils photo numériques (5, 5') qui sont fixés à distance l'un de l'autre sur le même dispositif de support (4).

5. Procédé de détection selon l'une des revendications 1 à 3, **caractérisé en ce que** l'agencement d'origine des articles de laboratoire (1) sur la zone de travail (2) du poste de travail de laboratoire (3) est détecté par deux appareils photo numériques (5, 5'), ces appareils photo numériques (5) étant fixés à deux dispositifs de support différents (4, 4') agencés à distance l'un de l'autre.

6. Procédé de détection selon l'une des revendications précédentes, **caractérisé en ce que** pour détecter l'agencement d'origine des articles de laboratoire (1) sur la zone de travail (2) du poste de travail de laboratoire (3), on déplace le au moins un dispositif de support (4) avec un ou deux appareils photo numériques fixés dessus (5, 5') à au moins deux emplacements de prise de vue, à chacun de ces emplacements une image numérique de référence (6) étant prise avec chacun des appareils photo numériques (5, 5').

7. Procédé de détection selon la revendication 6, **caractérisé en ce que** le déplacement des appareils photo numériques (5, 5') vers les emplacements de prise de vue et la prise des images numériques de référence (6) sur les emplacements de prise de vue sont commandés par un logiciel du poste de travail de laboratoire (3).

8. Procédé de détection selon l'une des revendications précédentes, **caractérisé en ce que** chacun des fichiers de paramètres d'image de référence (13) générés à l'étape g) comprend des paramètres X/Y ou des coordonnées polaires de la section d'image de référence correspondante (12).

9. Procédé de détection selon l'une des revendications précédentes, **caractérisé en ce que** les images numériques de référence (6) sont regroupées en une image globale de référence (15).

10. Procédé de détection selon l'une des revendications précédentes, **caractérisé en ce que** l'exposition des images numériques de référence (6) ou de l'image globale de référence (15) est contrôlée, et **en ce qu'**en cas de surexposition ou de sous-exposition des images numériques de référence (6) ou de l'image globale de référence (15), on procède à l'une des étapes alternatives suivantes :
- il est demandé à l'utilisateur,
- il est envoyé une instruction à une commande,
- il est envoyé automatiquement un ordre à une commande,
demandant à détecter de nouveau l'agencement d'origine des articles de laboratoire (1) sur la zone de travail (2) du poste de travail de laboratoire (3).

11. Procédé pour contrôler l'agencement des articles de laboratoire (1) sur une zone de travail (2) d'un poste de travail de laboratoire (3), dans lequel on compare un agencement actuel des articles de laboratoire (1) avec un agencement d'origine des articles de laboratoire (1) sur la zone de travail (2) du même poste de travail de laboratoire (3) détecté selon l'une des revendications 1 à 10, **caractérisé en ce que** le procédé comprend générer des sections d'image de référence non traitées (12) ou des sections d'image de référence traitées (12') ou générer une image globale de référence non traitée (15) ou une image globale de référence traitée (15') et les fichiers de paramètres d'image de référence correspondants (13) pour l'agencement d'origine des articles de laboratoire (1), choisis à partir d'un groupe comprenant des récipients sous la forme de plaques de microtitration et de tubes à essai, des supports pour recevoir ces récipients, des embouts de pipettes et/ou des magasins d'embouts de pipettes, sur la zone de travail (2) de ce poste de travail de laboratoire (3), le procédé de contrôle comprenant les étapes consistant à :
i) détecter un agencement actuel des articles de laboratoire (1) sur la zone de travail (2) du poste de travail de laboratoire (3) à l'aide d'au moins une image numérique actuelle (6'), les images numériques actuelles (6') étant prises avec le au moins un appareil photo numérique (5, 5') fixé sur le dispositif de support (4) dans une position et orientation définies ;
j) sauvegarder cette au moins une image numérique actuelle (6') dans une première mémoire (7) de l'ordinateur (8, 8') en liaison active avec le au moins un appareil photo numérique (5, 5') ;
k) charger les sections d'images de référence traitées (12') ou l'image globale de référence (15') traitée et charger les fichiers de paramètres d'image de référence correspondants (13) depuis la deuxième mémoire (7') dans la première mémoire (7) de l'ordinateur (8, 8') ;
l) créer des sections d'images actuelles (14) à partir des images numériques actuelles (6'), ces sections d'images actuelles (14) étant définies par des paramètres X/Y des fichiers de paramètres d'image de référence (13) ;
m) traiter les sections d'images actuelles (14) conformément aux sections d'image de référence (12') traitées ; et
n) sauvegarder les sections d'image actuelles traitées (14') dans la première mémoire (7) de l'ordinateur (8, 8').

12. Procédé de contrôle selon la revendication 11, **caractérisé en ce qu'**après l'étape h) on contrôle l'exposition des images numériques actuelles (6'), et **en ce qu'**en cas de surexposition ou de sous-exposition des images numériques actuelles (6'), on procède à l'une des étapes alternatives suivantes :
- il est demandé à l'utilisateur,
- il est envoyé une instruction à une commande,
- il est envoyé automatiquement un ordre à une commande,
demandant à procéder de nouveau à la détection de l'agencement actuel des articles de laboratoire (1) sur la zone de travail (2) du poste de travail de laboratoire (3).

13. Procédé de contrôle selon la revendication 11, **caractérisé en ce que** lorsque l'on créé les sections d'images actuelles (14) définies par les paramètres X/Y ou par les coordonnées polaires des fichiers de paramètres d'image de référence (13) à partir des images numériques actuelles (6') au cours de l'étape j), on ajoute en plus une zone tampon (16) entourant ces sections d'images actuelles (14).

14. Procédé de contrôle selon l'une des revendications 11 à 13, **caractérisé en ce qu'**il est créé à partir de chaque section d'image de référence (12) ou d'image globale de référence (15) une image en niveaux de gris de référence (17), et **en ce que** chaque image en niveaux de gris de référence (17) d'une section d'image de référence (12) ou d'une image globale de référence (15) et/ou chaque niveau de couleur R (rouge), V (vert) ou B (bleu) d'une section d'image de référence en couleur (12) ou d'une image de référence en couleur (15) est soumise à au moins une opération de dérivation.

15. Procédé de contrôle selon la revendication 11 ou 13, **caractérisé en ce que** les sections d'image actuelles (14') traitées à l'étape l) avec ou sans zone tampon (16) sont comparées avec les sections d'image de référence traitées (12') dans l'ordinateur (8, 8'), et **en ce que** l'on recherche à l'intérieur de chaque section d'image actuelle (14') traitée avec ou sans zone tampon (16) la section d'image de référence (12') traitée correspondante.

16. Procédé de contrôle selon la revendication 15, **caractérisé en ce que** pour chaque caractéristique (10', 10", 10"') on détermine à l'aide des résultats si, en ce qui concerne le contenu de l'image et la position des caractéristiques (10', 10", 10"'), il existe une concordance entre l'agencement actuel des articles de laboratoire (1) et l'agencement d'origine des articles de laboratoire (1) sur la zone de travail (2) du poste de travail de laboratoire (3), ces résultats comprenant une composante de contenu de l'image, une composante d'emplacement dans une direction X et une composante d'emplacement dans une direction Y ou des composantes d'emplacement correspondant aux coordonnées polaires, et **en ce qu'**on établit la concordance de chacune de ces au moins trois composantes par rapport à une valeur seuil correspondante.

17. Procédé de contrôle selon la revendication 16, **caractérisé en ce que** chaque concordance parfaite avec une valeur de qualité q = 1 est affichée sur l'appareil d'affichage d'images (9) comme champ individuel associé à la section d'image actuelle correspondante (14) d'une première couleur, et chaque correspondance suffisante avec une valeur de qualité q ≥ 0,650 est affichée comme champ individuel associé à la section d'image actuelle correspondante (14) d'une deuxième couleur.

18. Procédé de contrôle selon la revendication 17, **caractérisé en ce que** chaque erreur est affichée sous forme d'alarme, une erreur signifiant qu'aucune concordance suffisante avec une valeur de qualité q ≥ 0,650 n'a été détectée, et l'alarme étant choisie à partir d'un groupe composé d'une alarme visuelle, d'une alarme sonore, d'un message d'alarme et d'un blocage mécanique du poste de travail de laboratoire (3).

19. Poste de travail de laboratoire (3) comprenant au moins une zone de travail (2), en particulier pour réaliser un procédé de détection ou de contrôle de l'agencement des articles de laboratoire (1) sur cette zone de travail (2) du poste de travail de laboratoire (3), le poste de travail de laboratoire (3) comprenant :
o) au moins un dispositif de support (4) agencé au-dessus de la zone de travail (2) du poste de travail de laboratoire (3) ;
p) au moins un appareil photo numérique (5, 5') fixé sur le dispositif de support (4) dans une position et orientation définies ;
q) un ordinateur (8) en liaison active avec le au moins un appareil photo numérique (5) avec une première et une deuxième mémoires (7, 7') ;
r) un appareil d'affichage d'images (9) en liaison active avec l'ordinateur (8) ; et
s) au moins un périphérique d'entrée (11) en liaison active avec l'ordinateur (8) ;
**caractérisé en ce que** le poste de travail de laboratoire (3) comprend en outre :
t) un programme informatique pouvant être activé dans l'ordinateur (8) pour réaliser le procédé de détection ou de contrôle de l'agencement des articles de laboratoire (1) sur cette zone de travail (2) du poste de travail de laboratoire en question (3) comprenant les étapes a) à h) consistant à :
a) détecter un agencement d'origine des articles de laboratoire (1) sur la zone de travail (2) du poste de travail de laboratoire (3) à l'aide d'au moins une image numérique de référence (6), les images numériques de référence (6) étant prises par au moins un appareil photo numérique (5) fixé sur le dispositif de support (4) dans une position et une orientation définies ;
b) sauvegarder cette au moins une image numérique de référence (6) dans une première mémoire (7) d'un ordinateur (8, 8') en liaison active avec l'appareil photo numérique (5) ;
c) afficher la au moins une image numérique de référence (6) sur un appareil d'affichage d'images (9) en liaison active avec l'ordinateur (8, 8') ;
d) sélectionner et marquer par un utilisateur des caractéristiques visibles sur la au moins une image numérique de référence (10) sur la zone de travail (2), les caractéristiques (10) étant des endroits présentant un fort contraste et étant choisies à partir d'un groupe composé de caractéristiques de la zone de travail (10'), de caractéristiques des articles de laboratoire (10") et de marquages supplémentaires (10"'), l'utilisateur utilisant pour indiquer les caractéristiques (10) au moins un périphérique d'entrée (11) en liaison active avec l'ordinateur (8, 8') ;
e) tracer des rectangles de taille adaptée autour des caractéristiques marquées (10', 10", 10"') et confirmer par l'utilisateur à l'aide du périphérique d'entrée (11) ;
f) générer des sections d'image de référence (12) conformément aux zones rectangulaires confirmées par l'utilisateur à l'étape e) autour des caractéristiques marquées (10) sur la zone de travail (2) du poste de travail de laboratoire (3) ;
g) générer au moins un fichier de paramètres d'image de référence (13) pour la section d'image de référence (12) générée à l'étape f) ; et
h) sauvegarder les sections d'image de référence (12) générées à l'étape f) et le ou les fichiers de paramètres d'image de référence (13) généré(s) à l'étape g) dans une deuxième mémoire (7') ;
les articles de laboratoire (1) étant choisis à partir d'un groupe comprenant des récipients sous la forme de plaques de microtitration et de tubes à essai, des supports pour recevoir les récipients en question, des embouts de pipettes et/ou des magasins d'embouts de pipettes.

20. Poste de travail de laboratoire (3) selon la revendication 19, **caractérisé en ce que** le programme informatique pouvant être activé dans l'ordinateur (8) pour réaliser le procédé de détection ou de contrôle de l'agencement des articles de laboratoire (1) sur la zone de travail (2) du poste de travail de laboratoire (3) comprend en outre les étapes i) à n) suivantes :
i) détecter un agencement actuel des articles de laboratoire (1) sur la zone de travail (2) du poste de travail de laboratoire (3) à l'aide d'au moins une image numérique actuelle (6'), les images numériques actuelles (6') étant prises avec le au moins un appareil photo numérique (5, 5') fixé sur le dispositif de support (4) dans une position et orientation définies ;
j) sauvegarder cette au moins une image numérique actuelle (6') dans la première mémoire (7) de l'ordinateur (8, 8') en liaison active avec le au moins un appareil photo numérique (5, 5') ;
k) charger les sections d'images de référence traitées (12') ou l'image globale de référence (15') traitée et charger les fichiers de paramètres d'image de référence correspondants (13) depuis la deuxième mémoire (7') dans la première mémoire (7) de l'ordinateur (8, 8') ;
l) créer des sections d'images actuelles (14) à partir des images numériques actuelles (6'), ces sections d'images actuelles (14) étant définies par des paramètres X/Y des fichiers de paramètres d'image de référence (13) ;
m) traiter les sections d'images actuelles (14) conformément aux sections d'image de référence (12') traitées ; et
n) sauvegarder les sections d'image actuelles traitées (14') dans la première mémoire (7) de l'ordinateur (8, 8').

21. Poste de travail de laboratoire (3) selon la revendication 19, la zone de travail (2) étant définie par un axe X et par un axe Y s'étendant perpendiculairement à l'axe X, le poste de travail de laboratoire (3) comprenant un axe Z s'étendant perpendiculairement à la zone de travail (2), **caractérisé en ce que** le au moins un dispositif de support (4) est réalisé mobile dans le sens linéaire dans la direction de l'axe X ou de l'axe Y avec les appareils photo numériques (5, 5') fixés dessus.
